(19)

Europäisches
Patentamt
European
Patent Office
Office européen
des brevets

(11) **EP 3 096 242 A1**

(12) **EUROPEAN PATENT APPLICATION**

(43) Date of publication:
**23.11.2016 Bulletin 2016/47**

(51) Int Cl.:
***G06F 17/30*** *(2006.01)*

(21) Application number: **15168486.7**

(22) Date of filing: **20.05.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(71) Applicant: **Nokia Technologies Oy
02610 Espoo (FI)**

(72) Inventors:
• **Lehtiniemi, Arto Juhani
33880 Lempäälä (FI)**

• **Eronen, Antti Johannes
33820 Tampere (FI)**

(74) Representative: **Anderson, Oliver Ben et al
Venner Shipley LLP
200 Aldersgate
London EC1A 4HD (GB)**

Remarks:
Claims 16-20 are deemed to be abandoned due to
non-payment of the claims fees (Rule 45(3) EPC).

(54) **MEDIA CONTENT SELECTION**

(57) An apparatus is configured to cause a display to present a graphical user interface having two or more regions that correspond to respective media content characteristics and to receive indication from an input arrangement of received input manipulating an attribute of at least one region of the two or more of the regions and determining a dominance of at least one of said respective characteristics based, at least in part, on said attribute. The apparatus is configured to output information identifying media content in which said at least one characteristic has a dominance within a respective range of dominance values, said range being based, at least in part, on the determined dominance. The dominance values may include an overall value for the media content and/or varying dominance values based on temporal segments of the media content. The media content may include audio, image, video or text data. Example characteristics include contributing musical instruments, genre and subject matter.

EP 3 096 242 A1

**Description**

**Field**

This disclosure relates to a media content selection apparatus and method. In particular, this disclosure relates to an apparatus and method that can select one or more media content files based on characteristics of the media content.

**Background**

Audio and video content databases, streaming services, online stores and media player software applications often include genre classifications, to allow a user to search for media content to play, stream and/or download.
Certain devices are configured to construct a "playlist" of media content stored in a user's media library. Some databases, services, digital media stores and applications also include a facility for recommending music tracks, films or television programmes to a user based on a history of media content that they have accessed in conjunction with other data, such as rankings from the user of specific music tracks, albums, record labels, producers, artists, directors or actors contributing to audio or video content, history data from the user, history data from other users who have accessed the same or similar media content to that logged in the user's history or otherwise have similar user profiles, metadata assigned to the media content by experts and/or users, and so on.

**Summary**

According to an aspect, an apparatus includes a controller and a memory in which is stored computer-readable instructions which, when executed by the controller, cause the apparatus to cause presentation on a display of a graphical user interface having two or more regions that correspond to respective media content characteristics, using the input arrangement, receive an indication from an input arrangement of received input manipulating an attribute of at least one region of the two or more of the regions and determining a dominance of at least one of said respective characteristics based, at least in part, on said attribute, and output information identifying media content in which said at least one characteristic has a dominance within a respective range of dominance values, said range being based, at least in part, on the determined dominance. The apparatus may further comprise the display and the input arrangement.
The apparatus may be arranged to identify the media content. For example, the apparatus may include a media library, and the controller may be arranged to search the media library for media content having dominance values within the respective ranges.
Alternatively, or additionally, the computer-readable instructions, when executed by the controller, may cause the apparatus to cause transmission of a request to a second apparatus and to receive, from the second apparatus, a response indicating said media content. For example, the apparatus may cause transmission of a request to a remote server that hosts a media library, digital media store or streaming service, and the response may include a playlist or a list of content available for one or more of purchase, streaming and/or download. The apparatus may further include the communication arrangement.
This aspect may also provide a system comprising such an apparatus together with such a second apparatus, wherein said second apparatus includes a second controller, and a second memory in which is stored computer-readable instructions which, when executed by the second controller, cause the second apparatus to identify said media content in which said at least one characteristic has a dominance within a respective range of dominance values, said range being based, at least in part, on the determined dominance and transmit a response to the first apparatus indicating said media content. Optionally, said computer-readable instructions stored on the second memory, when executed by the second, may further cause the second apparatus to determine one or more features of a media content file, determine dominance of a characteristic of the media content in the media content file based at least in part on said one or more acoustic features, and store metadata for the media content indicating said dominance of the characteristic.
The attribute may be a size of the at least one region. For example, the heights and/or widths of the two or more regions may reflect the dominance of the corresponding characteristics. Alternatively, other attributes such as colour, shading, displayed positions or patterns of the regions may be used to reflect dominance.
The two or more regions may be presented as three dimensional objects in said graphical user interface.
The dominance may include an overall dominance indicating a level of distinguishability or prominence of the respective characteristic over the duration or extent of the media content.
Alternatively, or additionally, the dominance may include a varying dominance indicating a level of distinguishability or prominence of characteristic in one or more segments of the media content. Where the media content includes audiovisual, video or audio data, the segments may be temporal segments of the media content.
Where the media content is an image, a varying dominance may indicate dominance of the characteristic over spatial segments of an image. Alternatively, or additionally, if the media content is a stereo image, stereo audiovisual content or stereo video content, the varying dominance may indicate the dominance of the characteristic in the foreground relative to the background. If the media content is stereo audio data, the varying dominance may indicate the balance or dominance of the characteristic between different audio outputs.

In embodiments where the dominance includes a varying dominance, the two or more regions may include sub-regions, the attributes of the sub-regions indicating the varying dominance of the respective media content characteristic in a corresponding segment of the media content. Optionally, the memory may store one or more reference configurations of sub-regions, in which case the apparatus may be configured to receive indication from the input arrangement of received input selecting one of said reference configurations and the computer-readable instructions, when executed by the controller, may cause the apparatus to respond by displaying the two or more regions according to the selected reference configuration.

The apparatus may be configured to receive indication from the input arrangement of received input selecting one or more other regions of the two or more regions to be linked to the at least one region, and the computer-readable instructions, when executed by the controller, may cause the apparatus to respond to the input manipulating the attribute of the at least one region by adjusting the corresponding attribute of the one or more other regions. Alternatively, or additionally, where sub-regions are displayed, apparatus may be configured to receive indication from the input arrangement of received input selecting two or more sub-regions to be linked together, and the computer-readable instructions, when executed by the controller, may cause the apparatus to respond to the input manipulating the attribute of the at least one region or sub-region by adjusting the corresponding attribute of the one or more other linked regions or sub-regions. For example, adjustment to the attribute of a first one of the linked regions or sub-regions may cause the controller to adjust the attribute of the one or more other linked regions or sub-regions in the same manner. Optionally, the computer-readable instructions, when executed by the controller, may cause the apparatus to respond instead by adjusting the attribute of the one or more other linked regions or sub-regions to mirror the change to the attribute of the first linked region or sub-region.

The media content may include audio data and the respective characteristics may include audio characteristics. Examples of audio characteristics include a musical instrument contributing to the media content, a vocal contributing to the media content, a tempo of the media content, and a genre of the media content.

The media content may include image data and/or video data, and the respective characteristics may include visual characteristics. Examples of visual characteristics include genre and subject matter of the media content.

The media content may include text data. Examples of characteristics of text data include genre and subject matter.

This aspect may also provide a method that includes causing presentation on a display of a graphical user interface having two or more regions that correspond to respective media content characteristics, receiving indication from an input arrangement of received input manipulating an attribute of at least one region of the two or more of the regions and determining a dominance of at least one of said respective characteristics based, at least in part, on said attribute, and outputting information identifying media content in which a dominance of said at least one characteristic is within a respective range of dominance values, said range being based, at least in part, on the determined dominance. Outputting the information may include causing display of the information on the display.

The method may include identifying the media content.

The method may include causing transmission, via a communication arrangement, of a request for an indication of the media content to a second apparatus and receiving, from the second apparatus, a response containing said indication. Such a method may further include the second apparatus identifying media content in which said at least one characteristic has a dominance within a respective range of dominance values, said range being based, at least in part, on the determined dominance and causing transmission of a response to the first apparatus indicating said media content.

Alternatively, the method may include determining dominance of a characteristic of the media content in the media content file based at least in part on said one or more acoustic features, and storing metadata for the media content indicating said dominance of the characteristic.

The attribute may be a size of the at least one region. For example, the heights and/or widths of the two or more regions may reflect the dominance of the corresponding characteristics. Alternatively, other attributes such as colour, shading, displayed positions or patterns of the regions may be used to reflect dominance.

The two or more regions may be presented as three dimensional objects in said graphical user interface.

The dominance may include an overall dominance indicating a level of distinguishability or prominence of the respective characteristic over the duration or extent of the media content.

Alternatively, or additionally, the dominance may include a varying dominance indicating a level of distinguishability or prominence of the characteristic in one or more segments of the media content. Where the media content includes audiovisual, video or audio data, the segments may be temporal segments.

Where the media content is an image, the dominance may include a varying dominance indicating dominance of the characteristic over spatial segments of an image. Alternatively, or additionally, if the media content is a stereo image, stereo audiovisual content or stereo video content, the varying dominance may indicate the dominance of the characteristic in the foreground relative to the background. If the media content is stereo audio data, the varying dominance may indicate the balance or dominance of the characteristic between different audio outputs.

Where the dominance includes the varying dominance, the two or more regions may include sub-regions, the attributes of the sub-regions indicating the varying dominance of the respective media content characteristic in a corresponding segment of the media content. Optionally, one or more reference configurations of sub-regions may be stored, in which case, if an indication of received input selecting one of said reference configurations is received, the two or more regions are caused to be displayed according to the selected reference configuration.

The method may include receiving an indication of input selecting one or more other regions of the two or more regions to be linked to the at least one region, and responding to indication of a further received input manipulating the attribute of the at least one region by adjusting the corresponding attribute of the one or more other linked regions. Alternatively, or additionally, where sub-regions are displayed, an indication of received input may be received selecting two or more sub-regions to be linked together, in which case the method may include responding to further input manipulating the attribute of the at least one region or sub-region by adjusting the corresponding attribute of the one or more other linked regions or sub-regions. For example, adjustment to the attribute of a first one of the linked regions or sub-regions may cause the attribute of the one or more other linked regions or sub-regions to be adjusted in the same manner or, optionally, adjusted to mirror the adjustment to the first linked region or sub-region.

The media content may include audio data and the respective characteristics may include audio characteristics. Examples of audio characteristics include a musical instrument contributing to the media content, a vocal contributing to the media content, a tempo of the media content, and a genre of the media content.

The media content may include image data, such as stereo image data, audiovisual data and/or video data, and the respective characteristics may include visual characteristics. Examples of visual characteristics include genre and subject matter of the media content.

The media content may include text data. Examples of characteristics of text data include genre and subject matter.

According to another aspect, an apparatus includes a controller, and a memory in which is stored computer-readable instructions which, when executed by the controller, cause the apparatus to determine one or more features of media content, said media content including visual data, determine dominance of a characteristic in the media content based at least in part on said one or more features, and store metadata for the media content indicating said dominance of the characteristic.

The visual data may include image data, text or video data. For example, the visual data may include a film, an e-book, a presentation, a still image, which may optionally be a stereo image, and so on. Characteristics of such visual data may include, for example, a genre of the media content and/or subject matter of the media content.

The media content may, optionally, include audio data in addition to the visual data. Examples of such media content include music videos, television programmes, video clips and films. Where audio data is included, the characteristics may include one or more audio characteristics such as a musical instrument contributing to the media content, whether a musical track is vocal or instrumental, a genre of the audio data and so on.

The computer-readable instructions, when executed by the controller, may further cause the apparatus to select items of further media content from a catalogue, said further media content having a dominance of the characteristic within a range of dominance values defined at least in part based on the dominance of the characteristic of the media content, and output information identifying said one or more selected items. For example, the controller to select items of media content from a catalogue such as a media library stored in the memory or from a catalogue of a remote media library, such as a digital media store or online streaming service.

The apparatus may be arranged to receive a request from another apparatus indicating one of a first item of media content, information regarding a characteristic or contributor to media content, the dominance of one or more characteristics or one or more ranges of dominance values for respective characteristics. Alternatively, the apparatus may be configured to receive from a user interface an indication of received input indicating a preferred dominance of the characteristic, wherein said range of dominance values is further based on the input received via the user interface.

The dominance may include an overall dominance indicating a level of distinguishability or prominence of a characteristic in the media content and/or an overall dominance indicating a degree of conformity to a genre of the media content.

The dominance may include a varying dominance indicating a level of distinguishability or prominence of the characteristic in one or more segments of the media content. Where the media content includes audiovisual, video or audio data, the segments may be temporal segments.

Where the media content is an image, the dominance may include a varying dominance indicating dominance of the characteristic over spatial segments of an image. Alternatively, or additionally, if the media content is a stereo image, stereo audiovisual content or stereo video content, the varying dominance may indicate the dominance of the characteristic in the foreground relative to the background. If the media content is stereo audio data, the varying dominance may indicate the balance or dominance of the characteristic between different audio outputs.

Where the dominance includes varying dominance, the computer-readable instructions, when executed by the controller, may further cause the apparatus to determine one or more of a difference in dominance of the characteristic and an average of other characteristics in the media content and/or a frequency of changes in dominance for the characteristic and a duration of at least one section of the media content for which the characteristic is dominant.

This aspect may also provide a method including determining one or more features of media content, the media content including visual data, determining dominance of a characteristic in the media content based at least in part on said one or more acoustic features, and storing metadata for the media content indicating said dominance of the characteristic.

The visual data may include image data, text or video data. For example, the visual data may include a film, an e-book, a presentation, a still image, such as a stereo image, and so on. Characteristics of such visual data may include, for example, a genre of the media content and/or subject matter of the media content.

The media content may, optionally, include audio data in addition to the visual data. Examples of such media content include music videos, television programmes, video clips and films. Where audio data is included, the characteristics may include one or more audio characteristics such as a musical instrument contributing to the media content, whether a musical track is vocal or instrumental, a genre of the audio data and so on.

The method may include selecting one or more items of further media content from a media library having a dominance of the characteristic within a range of dominance values defined at least in part based on the dominance of the characteristic of the media content, and outputting information identifying said one or more selected items. For example, items of further media content may be selected from a catalogue such as a local media library or from a catalogue of a remote media library, such as a digital media store or online streaming service.

The method may include receiving an indication of received input indicating a preferred dominance of the characteristic, wherein said range of dominance values is further based on the received input. For example, a request may be received indicating one of a first item of media content, information regarding a characteristic or contributor to media content, the dominance of one or more characteristics or one or more ranges of dominance values for respective characteristics. Alternatively, where a user interface is provided, input indicating a preferred dominance of the characteristic may be received via the user interface.

The dominance may include an overall dominance indicating a level of distinguishability or prominence of the characteristic in the media content and/or an overall dominance indicating a degree to which the media content conforms to a particular genre.

The dominance may include a varying dominance indicating a level of distinguishability or prominence of the characteristic in one or more segments of the media content. Where the media content includes audiovisual, video or audio data, the segments may be temporal segments.

Where the media content is an image, the dominance may include a varying dominance indicating dominance of the characteristic over spatial segments of an image. Alternatively, or additionally, if the media content is a stereo image, stereo audiovisual content or stereo video content, the varying dominance may indicate the dominance of the characteristic in the foreground relative to the background. If the media content is stereo audio data, the varying dominance may indicate the balance or dominance of the characteristic between different audio outputs.

Where a varying dominance is included, the method may further include determining at least one of a difference in dominance of the characteristic and an average of other characteristics in the media content, a frequency of changes in dominance for the characteristic, and a duration or extent of at least one section of the media content for which the characteristic is dominant.

According to yet another aspect, an apparatus includes a controller, and a memory in which is stored computer-readable instructions which, when executed by the controller, cause the apparatus to select one or more items of media content from a catalogue having a dominance of a characteristic within a range of dominance values, the items of media content including visual data, and output information identifying said one or more selected items.

The visual data may include image data, text or video data. For example, the visual data may include a film, an e-book, a presentation, a still image, and so on. Characteristics of such visual data may include, for example, a genre of the media content and/or subject matter of the media content.

The range of dominance values may be based on a dominance for the characteristic in a first item of media content.

The apparatus may be configured to receive an indication from a user interface of received input indicating a preferred dominance of the characteristic, wherein said range of dominance values is further based on the input received via the user interface.

The dominance may include an overall dominance indicating a level of distinguishability or prominence of the characteristic in the media content and/or an overall dominance indicating a degree to which the media content conforms to a genre.

The dominance may include a varying dominance indicating a level of distinguishability or prominence of the characteristic in one or more segments of the media content.

Where the media content is an image, a varying dominance may indicate dominance of the characteristic over spatial segments of an image. Alternatively, or additionally, if the media content is a stereo image, stereo audiovisual content or stereo video content, the varying dominance may indicate the dominance of the characteristic in the foreground relative to the background. If the media content is stereo audio data, the varying dominance may indicate the balance or dominance of the characteristic between different audio outputs.

Where the dominance includes varying dominance, the computer-readable instructions, when executed by the controller, may further cause the apparatus to determine at least one of a difference in dominance of the characteristic and an average of other characteristics, a frequency of changes in dominance for the characteristic, and a duration of at least one section of the media content for which the characteristic is dominant.

This aspect also provides a method including selecting one or more items of media content from a catalogue having a dominance of a characteristic within a range of dominance values, and outputting information identifying said one or more selected items.

The method may include receiving an indication of received input indicating a preferred dominance of the characteristic, wherein said range of dominance values is further based on the received input.

The dominance may includes an overall dominance indicating a level of distinguishability or prominence of the characteristic in the media content, and an overall dominance indicating a degree to which the media content conforms to a genre.

The dominance may include a varying dominance indicating a level of distinguishability or prominence of a characteristic in one or more segments of the media content. Where the media content includes audiovisual, video or audio data, the segments may be temporal segments of the media content.

Where the media content is an image, the dominance may include a varying dominance indicating dominance of the characteristic over spatial segments of an image. Alternatively, or additionally, if the media content is a stereo image, stereo audiovisual content or stereo video content, the varying dominance may indicate the dominance of the characteristic in the foreground relative to the background. If the media content is stereo audio data, the varying dominance may indicate the balance or dominance of the characteristic between different audio outputs.

Where the dominance includes varying dominance, the method may include determining at least one of a difference in dominance of the characteristic and an average of other characteristics, a frequency of changes in dominance for the characteristic, and a duration of at least one section of the media content for which the characteristic is dominant.

This specification also describes computer-readable instructions which, when executed by computing apparatus, cause the computing apparatus to perform any of the above described methods.

This specification also describes apparatus comprising means for perform the operations of any of the above-described methods.

**Brief description of the drawings**

Example embodiments will now be described by way of non-limiting examples with reference to the accompanying drawings, of which:

Figure 1 is a block diagram of an apparatus according to an embodiment;
Figure 2 is a flowchart of a method according to an embodiment that may be performed by the apparatus of Figure 1;
Figure 3 depicts a first graphical user interface that may be displayed in the method of Figure 2;
Figure 4 is an example of a second graphical user interface that may be displayed in the method of Figure 2;
Figure 5 depicts user adjustment via the second graphical user interface of Figure 4;
Figure 6 is another example of a second graphical user interface that may be displayed in the method of Figure 2;
Figure 7 is yet another example of a second graphical user interface that may be displayed in the method of Figure 2;
Figure 8 depicts an example of adjustment to the second graphical user interface shown in Figure 7;
Figure 9 depicts an example of linking of items displayed on the second graphical user interface of Figure 4;
Figure 10 depicts the second graphical user interface after the linking shown in Figure 9;
Figure 11 depicts an example of adjustment of the second graphical user interface of Figure 10;
Figure 12 depicts an adjustment of the linking of the second graphical user interface of Figure 10;
Figure 13 depicts an example of adjustment of the second graphical user interface of Figure 12;
Figure 14 depicts another example of a second graphical user interface with linked items;
Figure 15 is a schematic diagram of a system according to an embodiment;
Figure 16 is a block diagram of a server in the system of Figure 15;
Figure 17 is a flowchart of a method that may be performed by the server of Figure 16;
Figure 18 is an overview of a method of determining dominance information for media content that may be performed by the server of Figure 16;
Figure 19 is a flowchart of a method in accordance with Figure 18;

Figure 20 is a flowchart of a method of extracting features from media content in part of the method of Figure 19;

Figure 21 depicts an example of frame blocking and windowing in the method of Figure 20;

Figure 22 is an example of a spectrum generated by transforming a portion of a frame in the method of Figure 20;

Figure 23 depicts a bank of weighted mel-frequency filters used in the method of Figure 20;

Figure 24 depicts a spectrum of log mel-band energies in the method of Figure 20;

Figure 25 is an overview of a process for obtaining multiple types of features in the method of Figure 19;

Figure 26 shows example probability distributions for a number of first classifications;

Figure 27 shows the example probability distributions of Figure 26 after logarithmic transformation;

Figure 28 is a flowchart of an example method of determining overall dominance in the method of Figure 19;

Figure 29 is a flowchart of an example method of determining varying dominance in the method of Figure 19;

Figure 30 is a graph of showing varying dominance values for various musical instruments in an example audio track; and

Figure 31 is a graph showing varying dominance values for a selected musical instrument relative to other musical instruments in the example audio track.

## Detailed description

Embodiments described herein concern selecting media content based on dominance of characteristics, such as tags, with reference to a particular example of music tracks. However, in other embodiments, media content including one of audio data, video data, still image data and text data or combinations of two or more types of such data may be selected and/or analysed in the manner described hereinbelow.

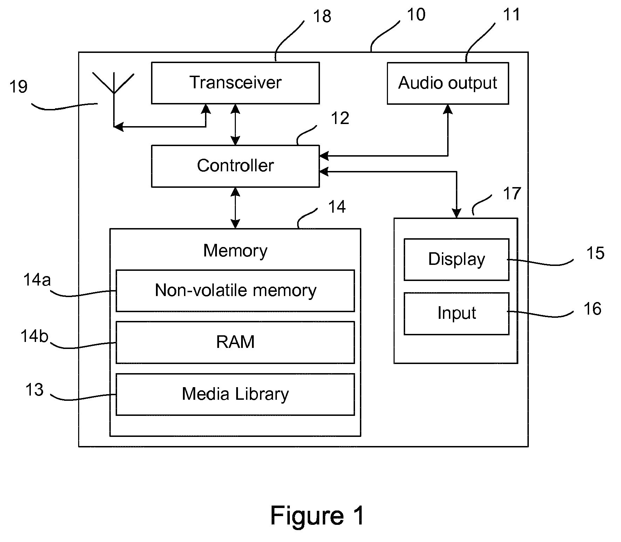

Figure 1 is a block diagram of a computing device, terminal 10, according to an example embodiment. The terminal 10 incorporates media playback hardware, including an audio output 11, such as a speaker and/or audio output jack, and a controller 12 that executes a media player software application to play audio content from a stored media library 13 in a memory 14 of the terminal 10 and/or access audio content over a network, not shown, for example, by streaming and/or downloading audio content from a remote server, not shown. The media player software application may play audio content through the audio output 11.

As well as audio content, the terminal 10 may be capable of playing video content from the media library 13 or streaming and/or downloading video content over the network, and presenting the video content using the audio output 11 and a display 15, and/or retrieving images, audiovisual or visual presentations, e-books or other text content from the media library 13 or over the network for presentation on the display 15.

The controller 12 may take any suitable form. For instance, the controller 12 may be a processing arrangement that includes a microcontroller, plural microcontrollers, a processor, such as a microprocessor, or plural processors or any suitable combination of processors and microcontrollers.

The memory 14 may include a non-volatile memory 14a such as read only memory (ROM) a hard disk drive (HDD) or a solid state drive (SSD) to store, amongst other things, an operating system and at least one software application to be executed by the controller 12 to control and perform the media playback. The memory 14 may also include Random Access Memory (RAM) 14b for the temporary storage of data.

The terminal 10 also includes an input arrangement 16. The input arrangement may include a keypad, not shown. However, in this particular example, the input arrangement 16 and display 15 are provided in the form of a touch screen display 17.

Suitable terminals 10 will be familiar to persons skilled in the art. For instance, a smart phone could serve as a terminal 10 in the context of this application. In other embodiments, a laptop, tablet, wearable or desktop computer device or media content player device may be used instead. Such devices typically include music and/or video playback and data storage functionality and can be connected to a server, not shown, via a cellular network, Wi-fi connection, Bluetooth® connection or other connection using a communication arrangement, such as a transceiver 18 and aerial 19, or by any other suitable connection such as a cable or wire, not shown.

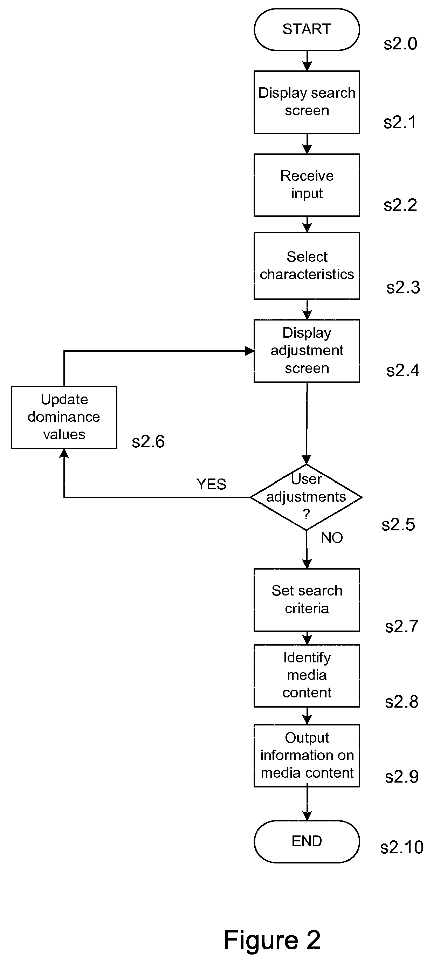

Figure 2 is a flowchart of a media content selection method that may be performed by the terminal 10. As noted above, the media content in this example is music tracks. However, the method may be applied to one or more of types of media content, including audio, image, text and video data and combinations thereof.

Beginning at s2.0, a first graphical user interface is presented on the display 15 of the terminal 10 (s2.1). As noted above, in this example the display 15 is part of the touch screen 17, through which a user can provide input directing the selection of media content. For example, a user may wish to identify music tracks with certain characteristics, such as music tracks belonging to a particular genre or featuring a particular musical instrument. In another example, a user may wish to identify music tracks that exhibit similarity to a particular music track. In other example embodiments, a user may wish to identify video clips in which a certain subject is prominent, feature a particular actor or presenter or belong to particular genre, or image data that features a particular subject or conforms to a particular style.

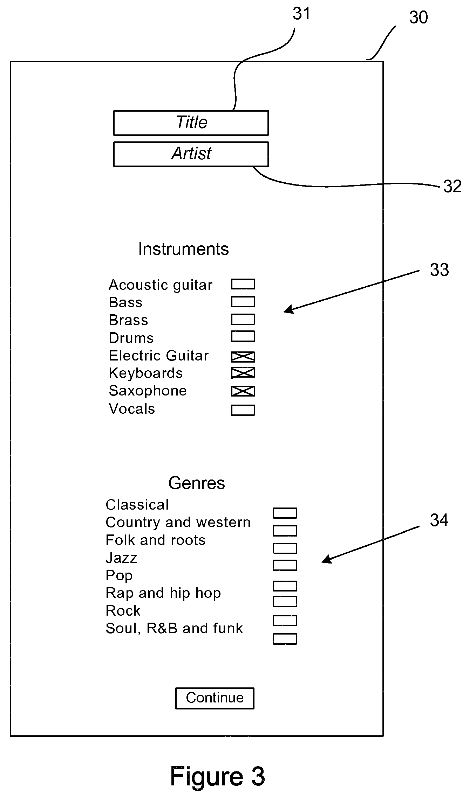

Figure 3 depicts an example of a first graphical user interface 30, referred to in the following as a "search screen". Returning to the example of music track selection, the search screen may include fields 31, 32, in which a user can type in a track title, artist or other information to form the basis of a search. A plurality of suggested tags 33, 34 may also be displayed. In this example, tags 33 correspond to different musical instruments, such as keyboards, electric guitar and saxophone, while tags 34 identify particular genres such as rock, soul or jazz. A user wishing to obtain a list of recommended music tracks may then provide input identifying a particular track and/or artist. Alternatively, or additionally, the user may provide input to indicate which tags 33, 34 should be used as search criteria, for example, by highlighting selected checkboxes, as shown in Figure 3.

The user input is received (s2.2) and, in this particular example, two or more media content characteristics represented by tags 33, 34 are selected as characteristics on which potential criteria for the search for other media content might be based (s2.3). Where a user identifies a music track or artist using fields 31, 32 but does not choose any of the tags 33, 34, the controller 12 may select tags based on those associated with the identified music track or artist.

Next, one or more second graphical user interfaces are displayed (s2.4), through which a user can indicate the relative importance of the selected characteristics by providing adjustments (s2.5).

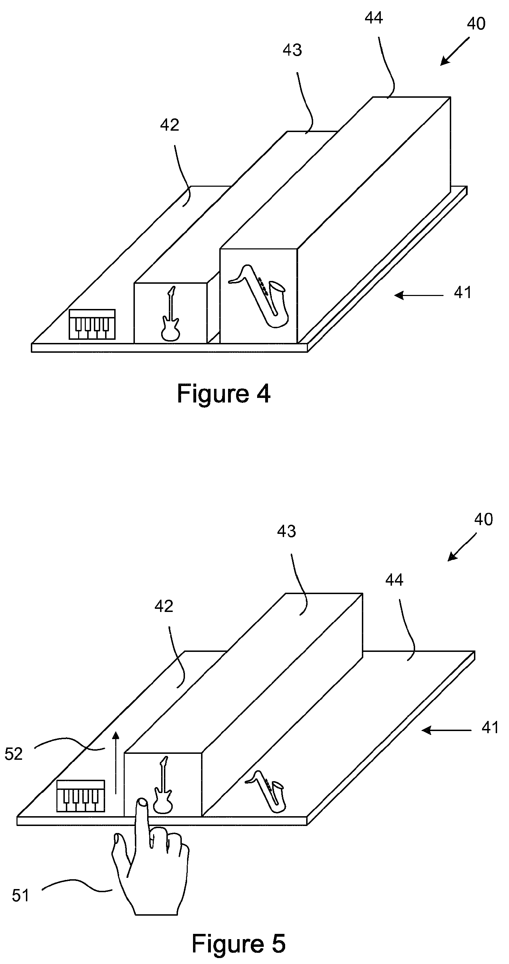

Figure 4 depicts an example of such a second graphical user interface 40, referred to in the following as an "adjustment screen", in which the media content is represented by a plane 41. Regions 42, 43, 44 of the plane 41 correspond to the selected characteristics associated with the checked ones of the tags 33 depicted in Figure 3.

The regions 42, 43, 44 are displayed with an attribute corresponding to the average dominance value for a respective tag. Where the tag relates to a particular musical instrument, the average dominance value reflects the audible distinguishability, or prominence, of that instrument over the others in the music track. Where the tag relates to a musical genre, the average dominance value reflects how closely the music track conforms to that genre.

In another example, where the media content is a video clip, an attribute of a region corresponding to a tag for a particular actor may reflect a dominance value based on the prominence of the actor's role, while the attribute of a region corresponding to a tag for a particular subject, such as "animals", may reflect a dominance value based on the relevance of the media content to that subject, or whether the subject matter appears in towards the foreground or background of the images in the video clip.

Where the user has identified specific media content using field 31 and/or field 32, dominance values for that media content may be depicted in the adjustment screen 40. Where dominance values are not available for that media content, the controller 12 may determine the dominance values or, optionally, may transmit a request to a server to retrieve or calculate the dominance values for the media content. Example methods for determining dominance are discussed later hereinbelow.

In the example shown in Figure 4, the average dominance value for each tag is reflected in the size of the regions 42, 43, 44 on the adjustment screen 40. In this particular example, the media content is a music track in which the saxophone is more dominant than the electric guitar, which in turn is more dominant than keyboards. These relative dominances are reflected by the region 44 corresponding to the saxophone tag having a greater height than the region 43 corresponding to the electric guitar tag, while the region 42 corresponding to the keyboard tag has a smaller height than the other regions 43, 44. However, in other embodiments, other attributes may be used as well as, or instead of, size to reflect dominance. For example, attributes such as size, colour, shading, patterns or displayed position may be used individually or in combination with each other to reflect dominance values.

The user may adjust the relative dominance of the displayed characteristics to be used as search criteria, by manipulating the attributes of the regions 42, 43, 44. In the example shown in Figure 5, the user 51 adjusts the dominance value for the electric guitar at s2.5 by increasing the height of the corresponding region 43 by swiping the touch screen 17 in the direction of the arrow 52.

If the user has made adjustments to the regions 42, 43, 44 (s2.5) then the dominance values for the characteristics to be used as search criteria are adjusted (s2.6) and the adjustment screen 40 is displayed with the attributes of the regions 42, 43, 44 updated accordingly (s2.4).

Alternatively, if selected by the user 51, a different adjustment screen may be disclosed at s2.4, so that additional adjustments of a different nature may be made.

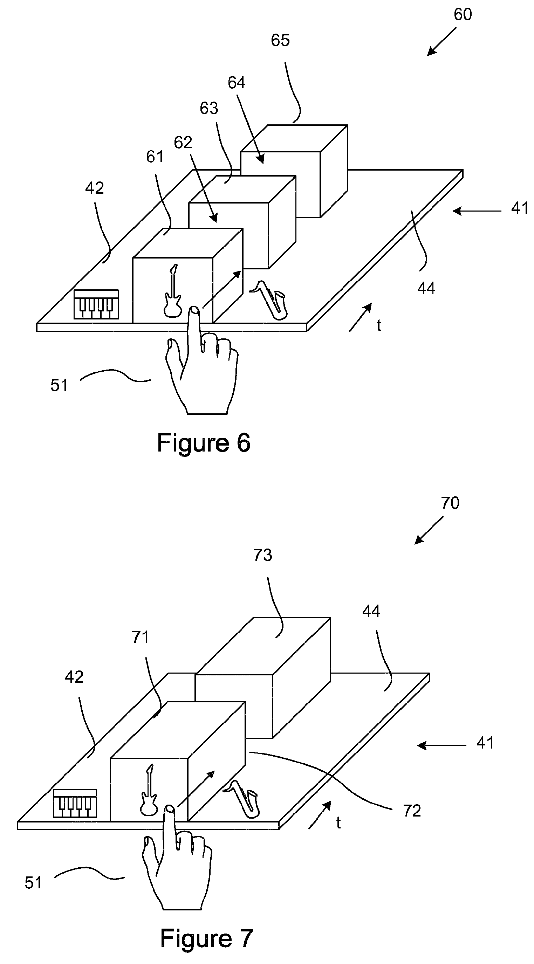

In many types of media content, the dominance of a characteristic is not constant throughout its duration. For example, the dominance of an instrument in a music track may vary between verses, choruses and solo sections. Similarly, a film may have dramatic scenes interspersed with comedic, or even musical, scenes. While the adjustment screen 40 shown in Figure 4 depicts average dominances for music instruments over the entirety of a music track, an alternative, or additional, adjustment screen may depict varying dominance for media content characteristics over the duration of an audio track, video clip or e-book. Figures 6 and 7 show examples of other adjustment screens 60, 70 that may be displayed at s2.4.

Instead of displaying one region 43 corresponding to an average dominance for the electric guitar over an entire music track, as in Figure 4, the second graphical user interface 60 of Figure 6 uses a number of sub-regions 61 to 65 to show the varying dominance of the electric guitar, where heights of the sub-regions 61 to 65 corresponding to dominance of the electric guitar during respective temporal segments of the music track. Figure 7 depicts another example of a second graphical user interface 70, in which three sub-regions 71, 72, 73 are used to represent the varying dominance of the electric guitar. In these examples, the duration of the music track is represented by the depicted position of the sub-regions along the axis t shown in Figures 6 and 7.

In the particular case of music tracks, there are certain structures that are common to several songs. For example, a structure such as:

1 - Introduction
2 - Verse
3 - Chorus
4 - Verse
5 - Chorus

forms part of many songs across multiple genres. The role of a particular musical instrument and, therefore, the varying dominance of that instrument, often corresponds to such a structure.

In some embodiments, common song structures are used as presets. For example, one or more common varying dominance patterns may be stored in the memory 14 and retrieved at step s2.4 for display in the second graphical user interface 60, 70 at s2.4 for the user to adjust, if required, at s2.5.

Where multiple structures are saved as presets, a user may be given the option of selecting one of the presets for display at s2.4. For example, the user 51 may toggle between the second graphical user interfaces 60, 70 shown in Figures 6 and 7 by tapping one of the sub-regions 61, 71.

In yet another embodiment, where specific media content has been indicated by a user, for example using the fields 31, 32 of the first graphical user interface 30, an initial structure may be determined automatically by the controller 12, or retrieved from a server via the Internet or other network, based on the specified media content. An example method of chorus detection that may be used in determining an initial structure is described in US Patent No. 7,659,471 B2, the disclosure of which is hereby incorporated by reference in its entirety.

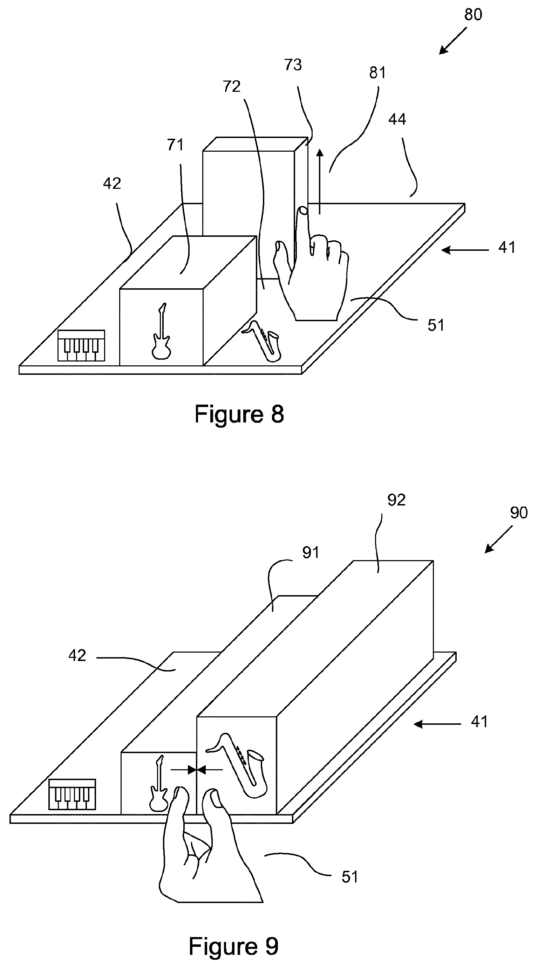

Where such sub-regions 61, 62, 63, 64, 65, 71, 72, 73 are displayed, the user 51 may be permitted to adjust the attribute of individual sub-regions. For example, in Figure 8, the user 51 is shown adjusting the height of the sub-region 72 by swiping upwards on the touch screen 17 in the direction of arrow 81.

The controller 12 may be configured to detect linking of regions or sub-regions in an adjustment screen 40, to allow the user 51 to adjust the attribute of multiple regions or sub-regions with one movement. Figure 9 shows an example of an adjustment screen 90 where the user 51 is making a pinching movement to link two regions 91, 92 together.

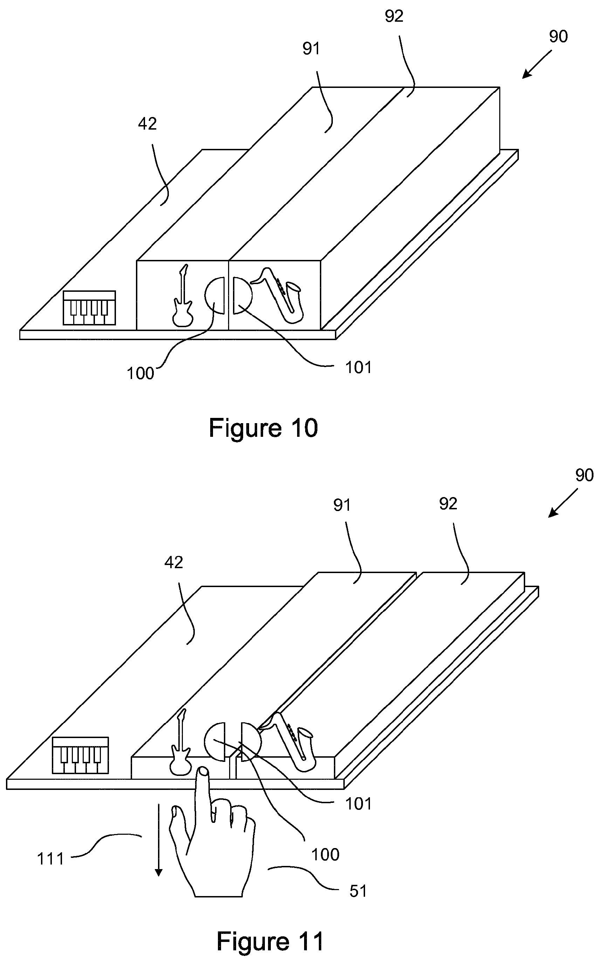

As shown in Figure 10, symbols 100, 101 may be displayed on the regions 91, 92 to indicate that they are linked and that adjustments made to one of the linked regions 91 will be replicated in the other linked region 92 or regions, to adjust the dominances of the characteristics corresponding to the linked regions 91, 92.

Figure 11 shows the adjustment screen 90 of Figures 9 and 10 in when the height of linked regions 91, 92, corresponding to the dominance values for the electric guitar and the saxophone respectively, are both reduced by the user 51 swiping downwards on one of the linked regions 91 in the direction of arrow 111.

In the example shown in Figures 10 and 11, the regions 91, 92 are linked together so that changes to one linked region 91 are replicated in the other linked region 92 or regions. Alternatively, or additionally, regions 91, 92 may be linked so that changes to one linked region 91 are mirrored, rather than replicated, in the other linked region 92 or regions.

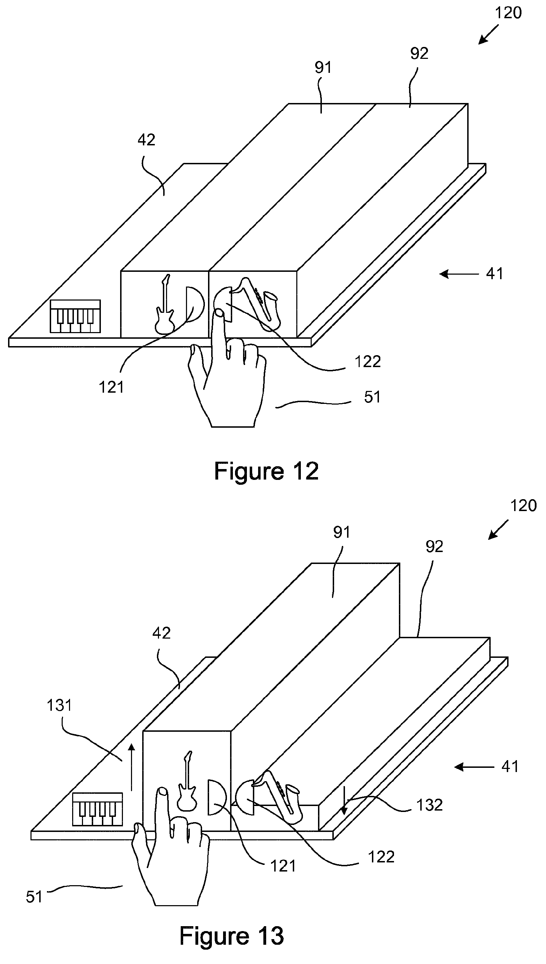

Figure 12 depicts an example of an adjustment screen 120 in which, having linked the regions 91, 92 using a pinching movement, as shown in Figure 10, the user 51 has indicated that the changes to one of the linked regions 91, 92 are to be mirrored by the other linked region or regions, for example, by tapping one of the symbols 100, 101 displayed after initial linking, as shown in Figure 10. Different symbols 121, 122 may then be displayed to indicate that the regions 91, 92 have been "mirror-linked" in this way.

When regions 91, 92 are linked in this manner, a change to one region 91 also results in an opposite change being made to the other linked region 92 or regions. Figure 13 shows an example in which an increase in the dominance of the electric guitar, indicated by an upward swipe movement by the user 51 over the region 91 in the direction of arrow 131 and a consequent increase in the height of the region 91 also results in a decrease in the dominance of the saxophone, shown by a decrease in the height of region 92, indicated by the arrow 132.

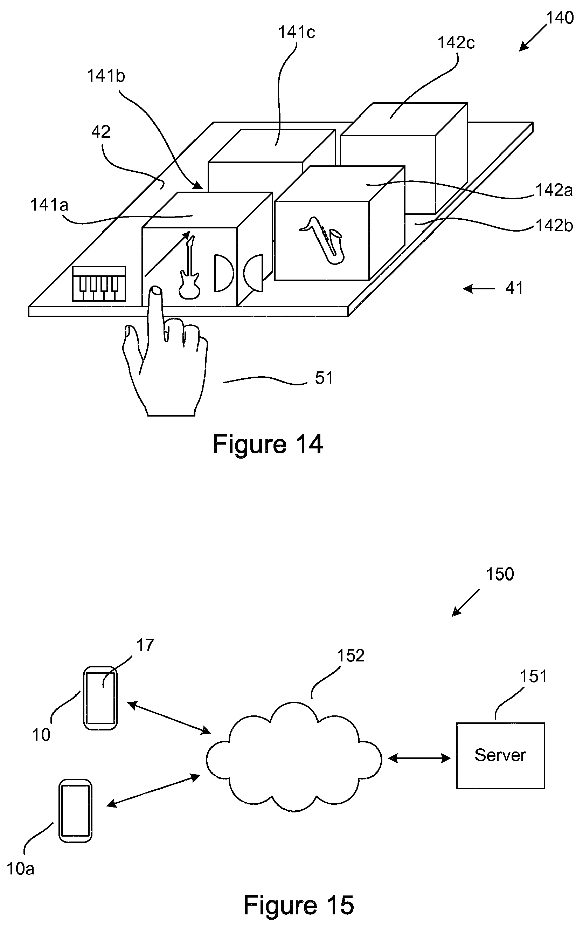

In some embodiments, the terminal 10 may be configured to permit a user to link sub-regions together. Figure 14 depicts an example of an adjustment screen 140 in which sub-regions 141a to 141c, corresponding to the electric guitar tag are linked to sub-regions 142a to 142c corresponding to the saxophone tag. In this particular example, the sub-regions 141a to 141c and sub-regions 142a to 142c are linked so that changes to the sub-regions 141a, 141b, 141c are mirrored by changes to the sub-regions 142a, 142b, 142c. While Figure 14 shows all of the sub-regions 141a to 141c for one tag being linked to all of the sub-regions 142a to 142c for another tag, in yet another embodiment, two or more selected sub-regions may be linked together.

When no further user adjustments have been received (s2.5), the controller 12 sets search criteria by setting ranges of dominance values based, at least in part, on the most recent dominance values (s2.7), that is, the dominance values following any adjustments by the user in steps s2.4 to s2.6. The ranges may be based on average dominance values and/or varying dominance values for one or more of the selected tags.

The controller 12 then identifies media content having characteristics with dominance values within the set ranges (s2.8) and outputs information identifying that media content (s2.9). For example, if media content stored in the media library 13 has metadata indicating dominance values, the terminal 1 may search the media library 13 for media content having dominance values within the ranges at s2.8, compile a playlist of that media content and present the playlist on the display 15 at s2.9.

In another embodiment, for example, where a user is searching for content on a streaming service, digital media store or other remote media library, or where dominance values for media content in the media library 13 are not available, the controller 12 may use the communication arrangement, in this example transceiver 18 and aerial 19, to send a request to a server to conduct the search and receives a response from the server identifying the media content (s2.8), before compiling and outputting a playlist (s2.9).

The media content selection method is then complete (s2.io).

Figure 15 depicts a system 150 according to an embodiment in which the search is performed by a server 151. The server 151 is connected to a network 152, which can be any data network such as a Local Area Network (LAN), Wide Area Network (WAN) or the Internet. The server 151 is configured to receive and process requests relating to media content from one or more terminals 10, 10a, via the network 152.

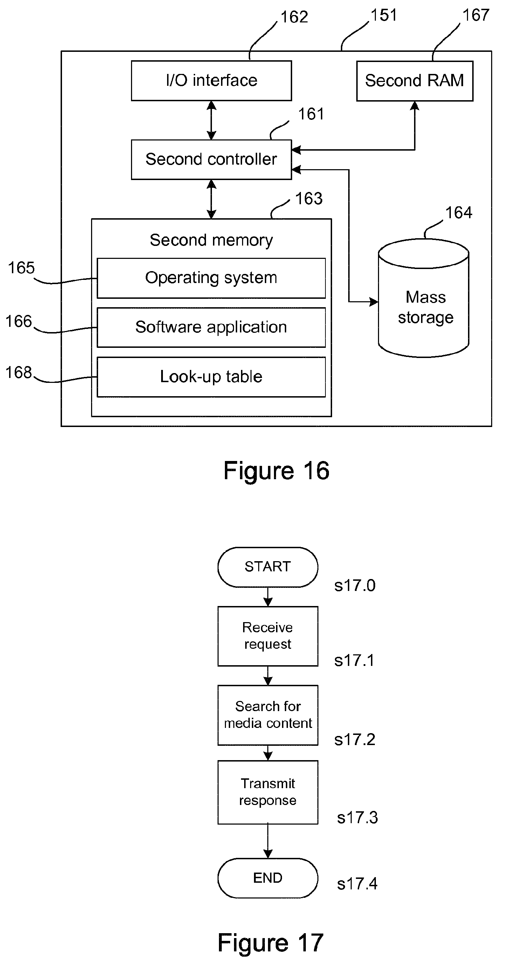

As shown in Figure 16, the server 151 includes a second controller 161, an input and output interface 162 configured to transmit and receive data via the network 152, a second memory 163 and a mass storage device 164 for storing one or more of image data, video data and audio data.

The second controller 161 is connected to each of the other components in order to control their operation. The second controller 161 may take any suitable form. For instance, it may be a processing arrangement that includes a microcontroller, plural microcontrollers, a processor such as a microprocessor, or plural processors.

The second memory 163 and mass storage device 164 may be in the form of a non-volatile memory, such as read only memory (ROM) a hard disk drive (HDD) or a solid state drive (SSD). The second memory 163 stores, amongst other things, an operating system 165 and at least one software application 166 to be executed by the second controller 161.

Second Random Access Memory (RAM) 167 is used by the second controller 161 for the temporary storage of data.

The second operating system 165 may contain code which, when executed by the second controller 161 in conjunction with the second RAM 167, controls operation of server 151 and provides an environment in which the or each software application 166 can run.

Software application 166 is configured to control and perform processing of one or more of audio data, video data, image data and text data by the second controller 161.

Figure 17 is a flowchart of an example of a method in which the server 151 performs a search for media content.

Beginning at step s17.0, the server 151 receives a request from the terminal 10 (s17.1) and performs a search for media content with dominance values in the set ranges (s17.2). The search may include the media content stored in the mass storage device 164 and/or other databases, for example, databases and services accessible via the network 152.

At s17.3, a response is transmitted to the terminal 10, indicating media content matching the criteria located in the search. For example, the response may be a playlist of media content from a streaming service, or a list of recommendations of media content for the user 51 to buy or access.

The process then ends (s17.4).

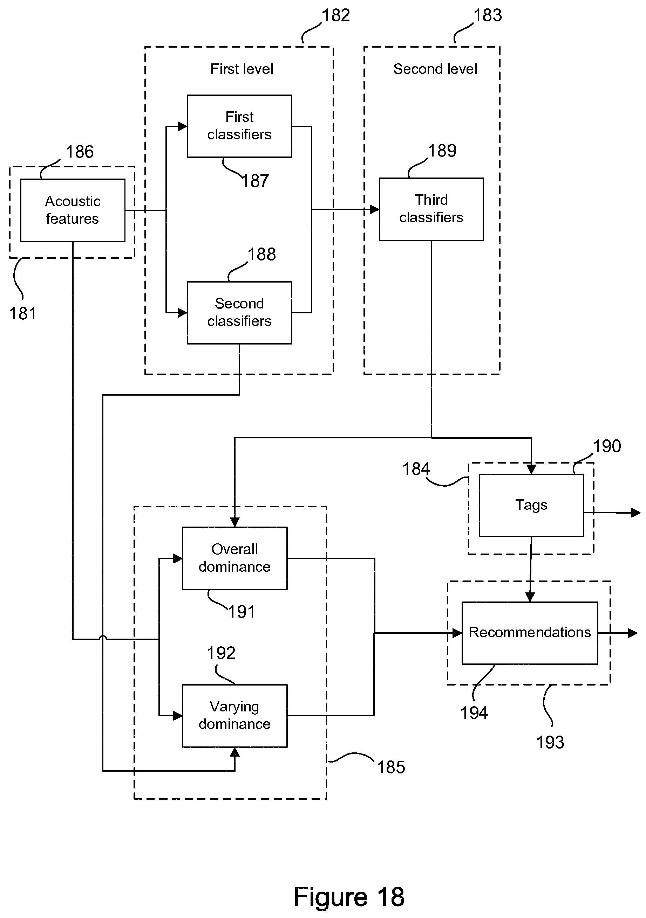

Figure 18 is an overview of a determination of tag and dominance information for media content by the second controller 161 of the server 150, in which the second controller 161 acts as a feature extractor 181, first level classifiers 182, second level classifiers 183, a tagging module 184 and a dominance determination module 185.

Features 186 of the media content are extracted and input to first level classifiers 182 to generate first level classifications for the media content. In this particular example, where the media content is an audio track, the features 186 are acoustic features. However, where the media content is a video, the features 186 may include one or more of audio features, visual features and other features such as subject-matter classifications, directors, actors and so on. Where the media content is an e-book, the features may be subject-matter classifications or keywords.

In this example, first classifiers 187 and second classifiers 188 are used to generate first and second classifications respectively. In the embodiments to be described below, the first classifiers 187 are non-probabilistic classifiers, while the second classifiers 188 are probabilistic classifiers.

The first and second classifications generated by the first level classifiers 182 are provided as inputs to the second level classifier 183. One or more second level classifications are generated by the second level classifier 183, based at least in part on the first and second classifications. In the embodiments to be described below, the second level classifier 183 includes third classifiers 189, which output a third classification.

One or more tags 190 are generated, based on the second level classifications. Such tags 190 may be stored by the tagging module 184 to characterise the media content in a database, organise or search a database of media content and/or determine a similarity between multiple media content files, for example, to select other media content for playback or purchase by a user.

The dominance determination module 185 is configured to calculate dominances 191, 192 of one or more of the characteristics indicated by the tags 192 for the media content. For a tag 190 based on the inclusion of a musical instrument in a music track, its overall dominance indicates how audibly distinguishable or prominent the particular instrument is when compared with the other instruments in the mix of the audio track. The dominance may reflect the significance of the role played by the instrument in a musical composition. For example, a leading instrument, such as lead vocal, would be expected to be more audibly distinguishable and, therefore, more dominant than an accompanying instrument, while a solo instrument would be expected to display even greater dominance. For a tag 190 based on a particular musical, film or book genre, its dominance relates to the strength or salience of the tag 190 for the media content to indicate a degree of conformity, that is how closely the media content conforms, to that particular genre.

The dominance of a tag 190 may be stable over the duration of the media content or may vary. Hence, the dominances 191, 192 calculated by the domination determination module 185 include an overall dominance 191, which may be a single value associated with the media content, and a varying dominance 192, which provides information showing how the dominance of the tag 192 changes over the duration or extent of the media content. The varying dominance 191 may be used, for example, to identify sections of a music track dominated by a particular musical instrument, such as a guitar solo in a rock song.

The second controller 161 may further act as a recommendation module 193, configured to conduct a search and select further media content from a catalogue or database for presentation as recommendations 194 for a user, based at least in part on results output by the dominance determination module 185.

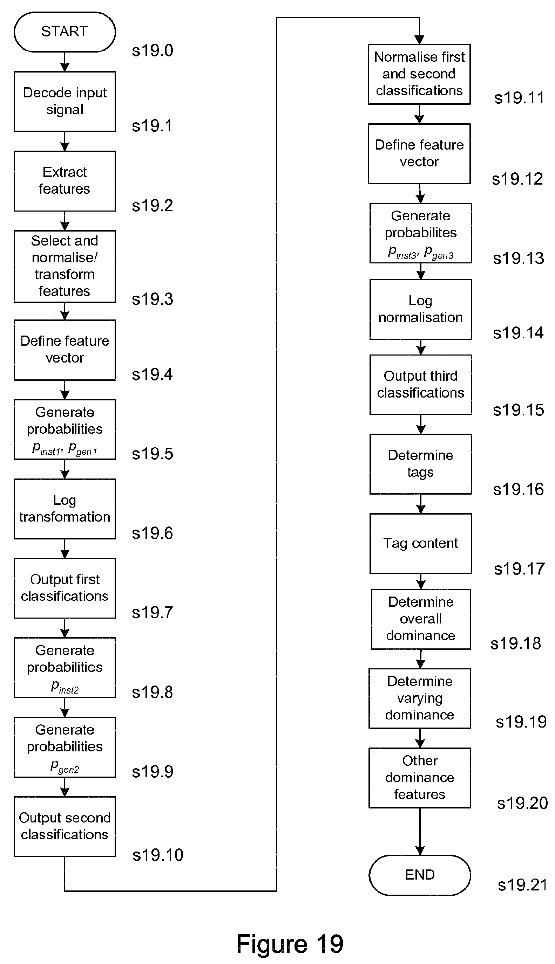

A method of determining dominances is described in the applicant's co-pending UK patent application GB1503467.1, filed on 2 March 2015, the disclosure of which is incorporated herein by reference. However, for the sake of completeness, the method will now be described in more detail, with reference to Figures 19 to 31. Parts of such a method, relating to extraction of acoustic features and determinations of probabilities, classifications and tags, were discussed in the applicant's co-pending patent application PCT/FI2014/051036, filed on 22 December 2014, the disclosure of which is incorporated herein by reference.

The method below is described with reference to dominance of musical instrument and musical genre characteristics of an audio track based on acoustic features 186. However, the method may be used to determine dominance of characteristics of other types of media content, including image data, video data and text, based on suitable features of the media content as discussed above.

Beginning at s19.0 of Figure 19, if an input signal conveying the audio track or other media content is in a compressed format, such as MPEG-1 Audio Layer 3 (MP3), Advanced Audio Coding (AAC) and so on, the input signal is decoded into pulse code modulation (PCM) data (s19.1). In this particular example, the samples for decoding are taken at a rate of 44.1 kHz and have a resolution of 16 bits.

Next, the software application 166 causes the second controller 161 to extract acoustic features 186 or descriptors which indicate characteristics of the audio track (s19.2). In this particular embodiment, the features 186 are based on mel-frequency cepstral coefficients (MFCCs). In other embodiments, other features such as fluctuation pattern and danceability features, beats per minute (BPM) and related features, chorus features and other features may be used instead of, or as well as MFCCs.

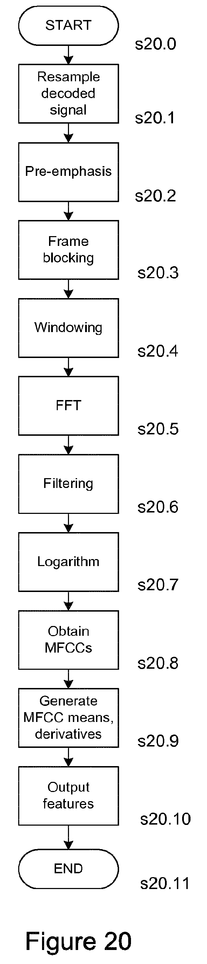

An example method for extracting acoustic features 186 from the input signal at s19.2 will now be described, with reference to Figure 20.

Starting at s20.0, the second controller 161 may, optionally, resample the decoded input signal at a lower rate, such as 22050 kHz (s20.1).

An optional "pre-emphasis" process is shown as s20.2. Since audio signals conveying music tend to have a large proportion of their energy at low frequencies, the pre-emphasis process filters the decoded input signal to flatten the spectrum of the decoded input signal. The relatively low sensitivity of the human ear to low frequency sounds may be modelled by such flattening. One example of a suitable filter for this purpose is a first-order Finite Impulse Response (FIR) filter with a transfer function of $1-0.98z^{-1}$.

At s20.3, the second controller 161 blocks the input signal into frames. The frames may include, for example, 1024 or 2048 samples of the input signal. Successive frames may be overlapping or they may be adjacent to each other according to a hop-size of, for example, 50% and 0%, respectively. In other examples, the frames may be non-adjacent so that only part of the input signal is formed into frames.

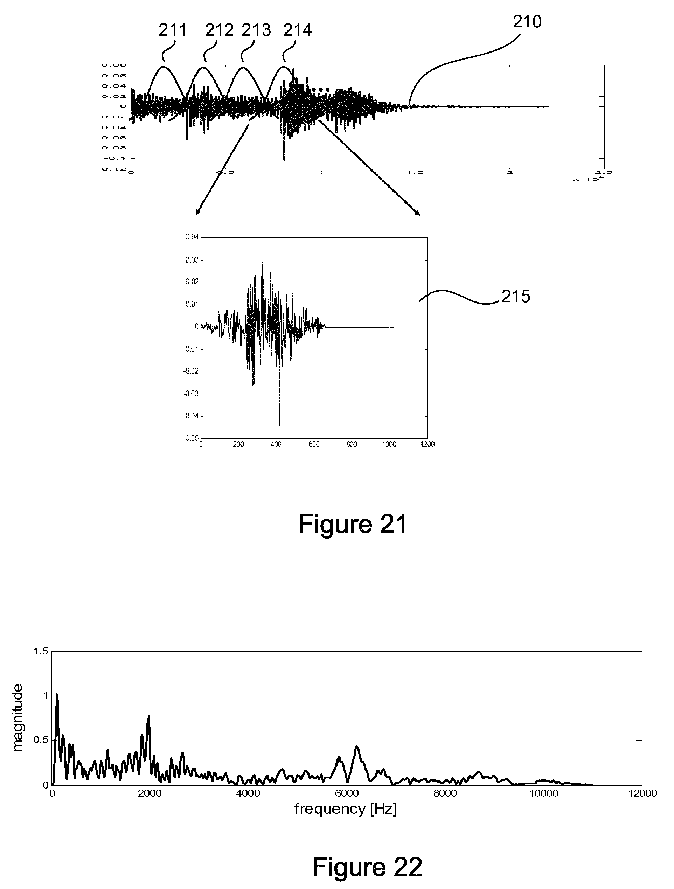

Figure 21 depicts an example in which an input signal 210 is divided into blocks to produce adjacent frames of about 30 ms in length which overlap one another by 25%. However, frames of other lengths and/or overlaps may be used. A Hamming window, such as windows 211, 212, 213, 214, is applied to the frames at s20.4, to reduce windowing artifacts. An enlarged portion in Figure 21 depicts a frame 215 following the application of such a window to the input signal 210.

At s20.5, a Fast Fourier Transform (FFT) is applied to the windowed signal to produce a magnitude spectrum of the input signal. An example FFT spectrum is shown in Figure 22. Optionally, the FFT magnitudes may be squared to obtain a power spectrum of the signal for use in place of the magnitude spectrum in the following.

The spectrum produced by the FFT at s20.5 may have a greater frequency resolution at high frequencies than is necessary, since the human auditory system is capable of better frequency resolution at lower frequencies but is capable of lower frequency resolution at higher frequencies. So, at s20.6, the spectrum is filtered to simulate non-linear frequency resolution of the human ear.

In this example, the filtering at s20.6 is performed using a filter bank having channels of equal bandwidths on the mel-frequency scale. The mel-frequency scaling may be achieved by setting the channel centre frequencies equidistantly on a mel-frequency scale, given by the Equation (1),

$$Mel(f) = 2595 \log_{10}\left(1 + \frac{f}{700}\right) \qquad (1)$$

where $f$ is the frequency in Hertz.

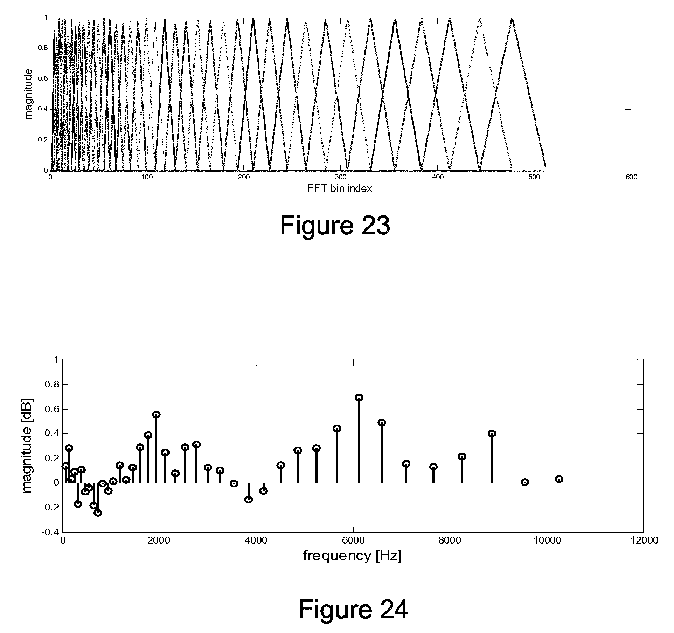

The output of each filtered channel is a sum of the FFT frequency bins belonging to that channel, weighted by a mel-scale frequency response. The weights for filters in an example filter bank are shown in Figure 23. In the example of Figure 23, 40 triangular-shaped bandpass filters are depicted whose center frequencies are evenly spaced on a perceptually motivated mel-frequency scale. The filters may span frequencies from 30 hz to 11025 Hz, in the case of the input signal having a sampling rate of 22050 Hz. For the sake of example, the filter heights in Figure 23 have been scaled to unity.

Variations may be made in the filter bank in other embodiments. For example, in other embodiments, the filters may span the band centre frequencies linearly below 1000 Hz and/or the filters may be scaled to have unit area instead of unity height. Alternatively, or additionally, the filter banks in other embodiments may have a different number of frequency bands or may span a different range of frequencies from the example shown in Figure 23.

The weighted sum of the magnitudes from each of the filter bank channels may be referred to as mel-band energies $\tilde{m}_j$, where $j=1...N$, $N$ being the number of filters.

In s20.7, a logarithm, such as a logarithm of base 10, may be taken from the mel-band energies $\tilde{m}_j$, producing log mel-band energies $\tilde{m}_j$. An example of a log mel-band energy spectrum is shown in Figure 24.

Next, at s20.8, the MFCCs are obtained. In this particular example, a Discrete Cosine Transform is applied to a vector of the log mel-band energies $\tilde{m}_j$ to obtain the MFCCs according to Equation (2),

$$c_{mel}(i) = \sum_{j=1}^{N} m_j \cos\left(\frac{\pi \cdot i}{N}\left(j - \frac{1}{2}\right)\right) \qquad (2)$$

where N is the number of filters, $i=O,..., I$ and $I$ is the number of MFCCs. In an exemplary embodiment, $I=20$.

At s20.9, further mathematical operations may be performed on the MFCCs produced at s20.8, such as calculating a mean of the MFCCs and/or time derivatives of the MFCCs to produce the required audio features 186 on which the calculation of the first and second classifications by the first and second classifiers 187, 188 will be based.

In this particular embodiment, the features 186 produced at s20.9 include one or more of:

- a MFCC matrix for the audio track;
- first and, optionally, second time derivatives of the MFCCs, also referred to as "delta MFCCs";
- a mean of the MFCCs of the audio track;
- a covariance matrix of the MFCCs of the audio track;
- an average of mel-band energies over the audio track, based on output from the channels of the filter bank obtained in s20.6;
- a standard deviation of the mel-band energies over the audio track;
- an average logarithmic energy over the frames of the audio track, obtained as an average of $c_{mel}(O)$ over a period of time obtained, for example, using Equation (2) at s20.8; and
- a standard deviation of the logarithmic energy.

The extracted features 186 are then output (s20.10) and the feature extraction method ends (s20.11).

As noted above, the features 186 extracted at s19.2 may also include a fluctuation pattern and danceability features for the track, such as:

- a median fluctuation pattern over the song;
- a fluctuation pattern bass feature;
- a fluctuation pattern gravity feature;
- a fluctuation pattern focus feature;
- a fluctuation pattern maximum feature;
- a fluctuation pattern sum feature;
- a fluctuation pattern aggressiveness feature;
- a fluctuation pattern low-frequency domination feature;
- a danceability feature (detrended fluctuation analysis exponent for at least one predetermined time scale);and
- a club-likeness value.

The mel-band energies calculated in s20.8 may be used to calculate one or more of the fluctuation pattern features listed above. In an example method of fluctuation pattern analysis, a sequence of logarithmic domain mel-band magnitude frames are arranged into segments of a desired temporal duration and the number of frequency bands is reduced. A FFT is applied over coefficients of each of the frequency bands across the frames of a segment to compute amplitude modulation frequencies of loudness in a described range, for example, in a range of 1 to 10 Hz. The amplitude modulation frequencies may be weighted and smoothing filters applied. The results of the fluctuation pattern analysis for each segment may take the form of a matrix with rows corresponding to modulation frequencies and columns corresponding to the reduced frequency bands and/or a vector based on those parameters for the segment. The vectors for multiple segments may be averaged to generate a fluctuation pattern vector to describe the audio track.

Danceability features and club-likeness values are related to beat strength, which may be loosely defined as a rhythmic characteristic that allows discrimination between pieces of music, or segments thereof, having the same tempo. Briefly, a piece of music characterised by a higher beat strength would be assumed to exhibit perceptually stronger and more pronounced beats than another piece of music having a lower beat strength. As noted above, a danceability feature may be obtained by detrended fluctuation analysis, which indicates correlations across different time scales, based on the mel-band energies obtained at s20.8.

Examples of techniques of club-likeness analysis, fluctuation pattern analysis and detrended fluctuation analysis are disclosed in British patent application no. 1401626.5, as well as example methods for extracting MFCCs. The disclosure of GB 1401626.5 is incorporated herein by reference in its entirety.

The features 186 extracted at s19.2 may include features relating to tempo in beats per minute (BPM), such as:

- an average of an accent signal in a low, or lowest, frequency band;
- a standard deviation of said accent signal;
- a maximum value of a median or mean of periodicity vectors;
- a sum of values of the median or mean of the periodicity vectors;
- tempo indicator for indicating whether a tempo identified for the input signal is considered constant, or essentially constant, or is considered non-constant, or ambiguous;
- a first BPM estimate and its confidence;
- a second BPM estimate and its confidence;
- a tracked BPM estimate over the audio track and its variation;
- a BPM estimate from a lightweight tempo estimator.

Example techniques for beat tracking, using accent information, are disclosed in US published patent application no. 2007/240558 A1, US patent application no. 14/302,057 and International (PCT) published patent application nos. WO2013/164661 A1 and WO2014/001849 A1, the disclosures of which are hereby incorporated by reference in their entireties.

In one example beat tracking method, described in GB 1401626.5, one or more accent signals are derived from the input signal 210, for detection of events and/or changes in the audio track. A first one of the accent signals may be a chroma accent signal based on fundamental frequency Fo salience estimation, while a second one of the accent signals may be based on a multi-rate filter bank decomposition of the input signal 210.

A BPM estimate may be obtained based on a periodicity analysis for extraction of a sequence of periodicity vectors on the basis of the accent signals, where each periodicity vector includes a plurality of periodicity values, each periodicity value describing the strength of periodicity for a respective period length, or "lag". A point-wise mean or median of the periodicity vectors over time may be used to indicate a single representative periodicity vector over a time period of the audio track. For example, the time period may be over the whole duration of the audio track. Then, an analysis can be performed on the periodicity vector to determine a most likely tempo for the audio track. One example approach comprises performing k-nearest neighbours regression to determine the tempo. In this case, the system is trained with representative music tracks with known tempo. The k-nearest neighours regression is then used to predict the tempo value of the audio track based on the tempi of k-nearest representative tracks. More details of such an approach have been described in Eronen, Klapuri, "Music Tempo Estimation With k -NN Regression", IEEE Transactions on Audio, Speech, and Language Processing, Vol. 18, Issue 1, pages 50-57, the disclosure of which is incorporated herein by reference.

Chorus related features that may be extracted at s19.2 include:

- a chorus start time; and
- a chorus end time.

Example systems and methods that can be used to detect chorus related features are disclosed in US 2008/236371 A1, the disclosure of which is hereby incorporated by reference in its entirety.

Other examples of features that may be used as additional input include:

- a duration of the audio track in seconds,
- an A-weighted sound pressure level (SPL);
- a standard deviation of the SPL;
- an average brightness, or spectral centroid (SC), of the audio track, calculated as a spectral balancing point of a windowed FFT signal magnitude in frames of, for example, 40 ms in length;
- a standard deviation of the brightness;
- an average low frequency ratio (LFR), calculated as a ratio of energy of the input signal below 100Hz to total energy of the input signal, using a windowed FFT signal magnitude in 40 ms frames; and
- a standard deviation of the low frequency ratio.

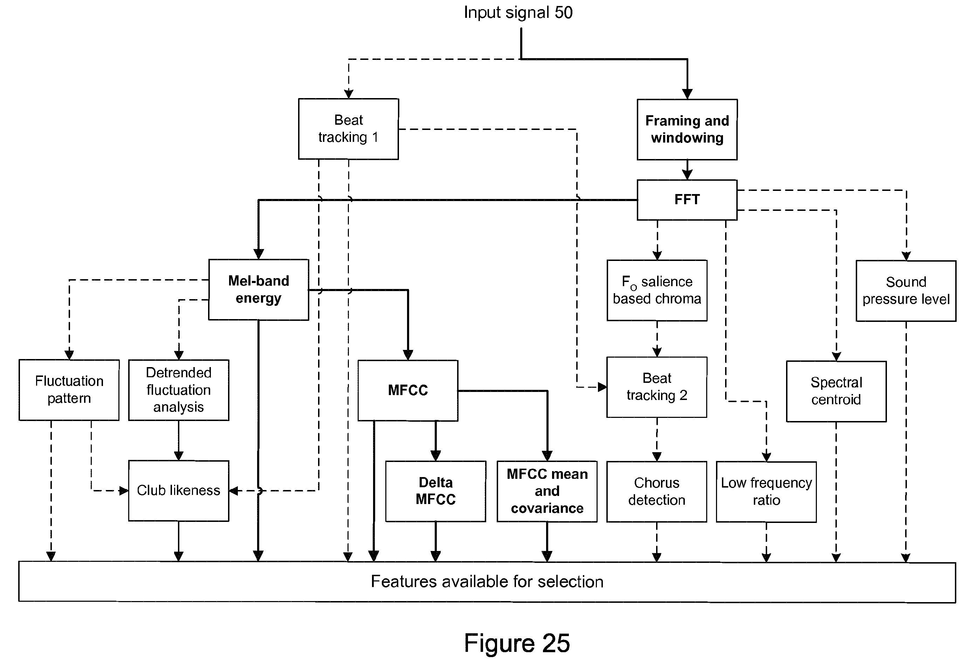

Figure 25 is an overview of a process of extracting multiple acoustic features 186 from media content, some or all of which may be obtained in s19.2. Figure 25 shows how some input features are derived, at least in part, from computations of other input features. The features 186 shown in Figure 25 include the MFCCs, delta MFCCs and mel-band energies discussed above, indicated using bold text and solid lines.

The dashed lines and standard text in Figure 25 indicate other features that may be extracted and made available alongside, or instead of, the MFCCs, delta MFCCs and mel-band energies, for use in calculating the first level classifications. For example, as discussed above, the mel-band energies may be used to calculate fluctuation pattern features and/or danceability features through detrended fluctuation analysis. Results of fluctuation pattern analysis and detrended fluctuation analysis may then be used to obtain a club-likeness value. Also, as noted above, beat tracking features, labeled as "beat tracking 2" in Figure 25, may be calculated based, in part, on a chroma accent signal from a $F_O$ salience estimation.

As noted above, this particular example relates to acoustic features 186 of an audio track. However, for other types of media content, other features may be extracted and/or determined instead of, or as well as, acoustic features 186.

Returning to Figure 19, in s19.3 to s19.10, the software application 166 causes the second controller 161 to produce the first level classifications, that is the first classifications and the second classifications, based on the features 186 extracted in s19.2. Although Figure 19 shows s19.3 to s19.10 being performed sequentially, in other embodiments, s19.3 to s19.7 may be performed after, or in parallel with, s19.8 to s19.10.

The first and second classifications are generated using the first classifiers 187 and the second classifiers 188 respectively, where the first and second classifiers 187, 88 are different from one another. For instance, the first classifiers 187 may be non-probabilistic and the second classifiers 188 may be probabilistic classifiers, or vice versa. In this particular embodiment, the first classifiers 187 are support vector machine (SVM) classifiers, which are non-probabilistic. Meanwhile, the second classifiers 188 are based on one or more Gaussian Mixture Models (GMMs).

In s19.3, one, some or all of the features 186 or descriptors extracted in s19.2, to be used to produce the first classifications, are selected and, optionally, normalised. For example, a look up table 168 or database may be stored in the second memory 163 of the for each of the first classifications to be produced by the server 150. The look up table 168 provides a list of features to be used to generate each first classifier and statistics, such as mean and variance of the selected features, that can be used in normalisation of the extracted features 186. In such an example, the second controller 161 retrieves the list of features from the look up table 168, and selects and normalises the listed features for each of the first classifications to be generated accordingly. The normalisation statistics for each first classification in the database may be determined during training of the first classifiers 187.

As noted above, in this example, the first classifiers 187 are SVM classifiers. The SVM classifiers are trained using a database of audio tracks for which information regarding musical instruments and genre is already available. The database may include tens of thousands of tracks for each particular musical instrument that might be tagged.

Examples of musical instruments for which information may be provided in the database include:

- Accordion;
- Acoustic guitar;
- Backing vocals;
- Banjo;
- Bass synthesizer;
- Brass instruments;
- Glockenspiel;
- Drums;
- Eggs;
- Electric guitar;
- Electric piano;
- Guitar synthesizer;
- Keyboards;
- Lead vocals;
- Organ;
- Percussion;
- Piano;
- Saxophone;
- Stringed instruments;
- Synthesizer; and
- Woodwind instruments.

The training database includes indications of genres that the audio tracks belong to, as well as indications of genres that the audio tracks do not belong to. Examples of musical genres that may be indicated in the database include:

- Ambient and new age;
- Blues;
- Classical;
- Country and western;
- Dance;
- Easy listening;
- Electronica;
- Folk and roots;
- Indie and alternative;
- Jazz;
- Latin;
- Metal;
- Pop;
- Rap and hip hop;
- Reggae;
- Rock;
- Soul, R&B and funk; and
- World music.

By analysing features 186 extracted from the audio tracks in the training database, for which instruments and/or genre are known, a SVM classifier can be trained to determine whether or not an audio track includes a particular instrument, for example, an electric guitar. Similarly, another SVM classifier can be trained to determine whether or not the audio track belongs to a particular genre, such as Metal.

In this embodiment, the training database provides a highly imbalanced selection of audio tracks, in that a set of tracks for training a given SVM classifier includes many more positive examples than negative ones. In other words, for training a SVM classifier to detect the presence of a particular instrument, a set of audio tracks for training in which the number of tracks that include that instrument is significantly greater than the number of tracks that do not include that instrument will be used. Similarly, in an example where a SVM classifier is being trained to determine whether an audio track belongs to a particular genre, the set of audio tracks for training might be selected so that the number of tracks that belong to that genre is significantly greater than the number of tracks that do not belong to that genre.

An error cost may be assigned to the different first classifications to take account of the imbalances in the training sets. For example, if a minority class of the training set for a particular first classification includes 400 songs and an associated majority class contains 10,000 tracks, an error cost of 1 may be assigned to the minority set and an error cost of 400/10,000 may be assigned to the majority class. This allows all of the training data to be retained, instead of downsampling data of the negative examples.

New SVM classifiers can be added by collecting new training data and training the new classifiers. Since the SVM classifiers are binary, new classifiers can be added alongside existing classifiers.

As mentioned above, the training process can include determining a selection of one or more features 186 to be used as a basis for particular first classifications and statistics for normalising those features 186. The number of features available for selection, $M$, may be much greater than the number of features selected for determining a particular first classification, $N$; that is, $M >> N$. The selection of features 186 to be used is determined iteratively, based on a development set of audio tracks for which the relevant instrument or genre information is available, as follows.

Firstly, to reduce redundancy, a check is made as to whether two or more of the features are so highly correlated that the inclusion of more than one of those features would not be beneficial. For example, pairwise correlation coefficients may be calculated for pairs of the available features and, if it is found that two of the features have a correlation coefficient that is larger than 0.9, then only one of that pair of features is considered available for selection.

The feature selection training starts using an initial selection of features, such as the average MFCCs for audio tracks in the development set or a single "best" feature for a given first classification. For instance, a feature that yields the largest classification accuracy when used individually may be selected as the "best" feature and used as the sole feature in an initial feature selection.

An accuracy of the first classification based on the initial feature selection is determined. Further features are then added to the feature selection to determine whether or not the accuracy of the first classification is improved by their inclusion.

Features to be tested for addition to the selection of features may be chosen using a method that combines forward feature selection and backward feature selection in a sequential floating feature selection. Such feature selection may be performed during the training stage, by evaluating the classification accuracy on a portion of the training set.

In each iteration, each of the features available for selection is added to the existing feature selection in turn, and the accuracy of the first classification with each additional feature is determined. The feature selection is then updated to include the feature that, when added to the feature selection, provided the largest increase in the classification accuracy for the development set.

After a feature is added to the feature selection, the accuracy of the first classification is reassessed, by generating first classifications based on edited features selections in which each of the features in the feature selection is omitted in turn. If it is found that the omission of one or more features provides an improvement in classification accuracy, then the feature that, when omitted, leads to the biggest improvement in classification accuracy is removed from the feature selection. If no improvements are found when any of the existing features are left out, but the classification accuracy does not change when a particular feature is omitted, that feature may also be removed from the feature selection in order to reduce redundancy.

The iterative process of adding and removing features to and from the feature selection continues until the addition of a further feature no longer provides a significant improvement in the accuracy of the first classification. For example, if the improvement in accuracy falls below a given percentage, the iterative process may be considered complete, and the current selection of features is stored in the lookup table 168, for use in selecting features in s19.3.

The selected features 186 may be normalised, for example, by subtracting a mean value for the feature and normalising the standard deviation. However, it is noted that the normalisation of the selected features 186 at s19.3 is optional. Where provided, the normalisation of the selected features 186 in s19.3 may potentially improve the accuracy of the first classifications. Where normalisation is used, the features may be normalised before or after the selection is performed.

In another embodiment, at s19.3, a linear feature transform may be applied to the available features 186 extracted in s19.2, instead of performing the feature selection procedure described above. For example, a Partial Least Squares Discriminant Analysis (PLS-DA) may be used to obtain a linear combination of features for calculating a corresponding first classification. Instead of using the above iterative process to select N features from the set of M features, a linear feature transform is applied to an initial high-dimensional set of features to arrive at a smaller set of features which provides a good discrimination between classes. The initial set of features may include some or all of the available features, such as those shown in Figure 25, from which a reduced set of features can be selected based on the result of the transform.

The PLS-DA transform parameters may be optimized and stored in a training stage. During the training stage, the transform parameters and its dimensionality may be optimized for each tag or output classification, such as an indication of an instrument or a genre. More specifically, the training of the system parameters can be done in a cross-validation manner, for example, as five-fold cross-validation, where all the available data is divided into five non-overlapping sets. At each fold, one of the sets is held out for evaluation and the four remaining sets are used for training. Furthermore, the division of folds may be specific for each tag or classification.

For each fold and each tag or classification, the training set is split into 50%-50% inner training-test folds. Then, the PLS-DA transform may be trained on the inner training-test folds and the SVM classifier may be trained on the obtained dimensions. The accuracy of the SVM classifier using the transformed features transformed may be evaluated on the inner test fold. It is noted that, when a feature vector for an audio track or other media content is tested, it is subjected to the same PLS-DA transform, the parameters of which were obtained during training. This manner, an optimal dimensionality for the PLS-DA transform may be selected. For example, the dimensionality may be selected such that the area under the receiver operating characteristic (ROC) curve is maximized. In one example embodiment, an optimal dimensionality is selected among candidates between 5 to 40 dimensions. Hence, the PLS-DA transform is trained on the whole of the training set, using the optimal number of dimensions, and then used in training the SVM classifier.

In the following, an example is discussed in which the selected features 186 on which the first classifications are based are the mean of the MFCCs of the audio track and the covariance matrix of the MFCCs of the audio track, although in other examples alternative and/or additional features, such as the other features shown in Figure 25, may be used.

At s19.4, the second controller 161 defines a single "feature vector" for each set of selected features 186 or selected combination of features 186.

The feature vectors may then be normalized to have a zero mean and a variance of 1, based on statistics determined and stored during the training process.

At s19.5, the second controller 161 generates one or more first probabilities that the audio track has a certain characteristic, corresponding to a potential tag 190, based on the normalized transformed feature vector or vectors. A first classifier 187 is used to calculate a respective probability for each feature vector defined in s19.4. In this manner, the number of first classifiers 187 corresponds to the number of characteristics or tags 190 to be predicted for the audio track.

In this particular example, a probability is generated for each instrument tag and for each musical genre tag to be predicted for the audio track, based on the mean MFCCs and the MFCC covariance matrix. In other embodiments, the controller may generate only one or some of these probabilities and/or calculate additional probabilities at s19.5. The different classifications may be based on respective selections of features from the available features 186 extracted in s19.2.

The first classifiers 187, being SVM classifiers, may use a radial basis function (RBF) kernel $K$, defined as:

$$K(\vec{u}, \vec{v}) = e^{-\gamma\left(\|\vec{u}-\vec{v}\|^2\right)} \qquad (3)$$

where the default $\gamma$ parameter is the reciprocal of the number of features in the feature vector, $\vec{u}$ is the input feature vector and $\vec{v}$ is a support vector.

The first classifications may be based on an optimal predicted probability threshold $p_{thr}$ that separates a positive prediction from a negative prediction for a particular tag, based on the probabilities output by the SVM classifiers. The setting of an optimal predicted probability threshold $p_{thr}$ may be learned in the training procedure to be described later below. Where there is no imbalance in data used to train the first classifiers 187, the optimal predicted probability threshold $p_{thr}$ may be 0.5. However, where there is an imbalance between the number of tracks providing positive examples and the number of tracks provided negative examples in the training sets used to train the first classifiers 187, the threshold $p_{thr}$ may be set to a prior probability of a minority class $P_{min}$ in the first classification, using Equation (4) as follows:

$$p_{thr} = P_{min} = \frac{n_{min}}{n_{maj}} \qquad (4)$$

where, in the set of n tracks used to train the SVM classifiers, $n_{min}$ is the number of tracks in the minority class and $n_{maj}$ is the number of tracks in a majority class.

The prior probability $P_{min}$ may be learned as part of the training of the SVM classifiers.

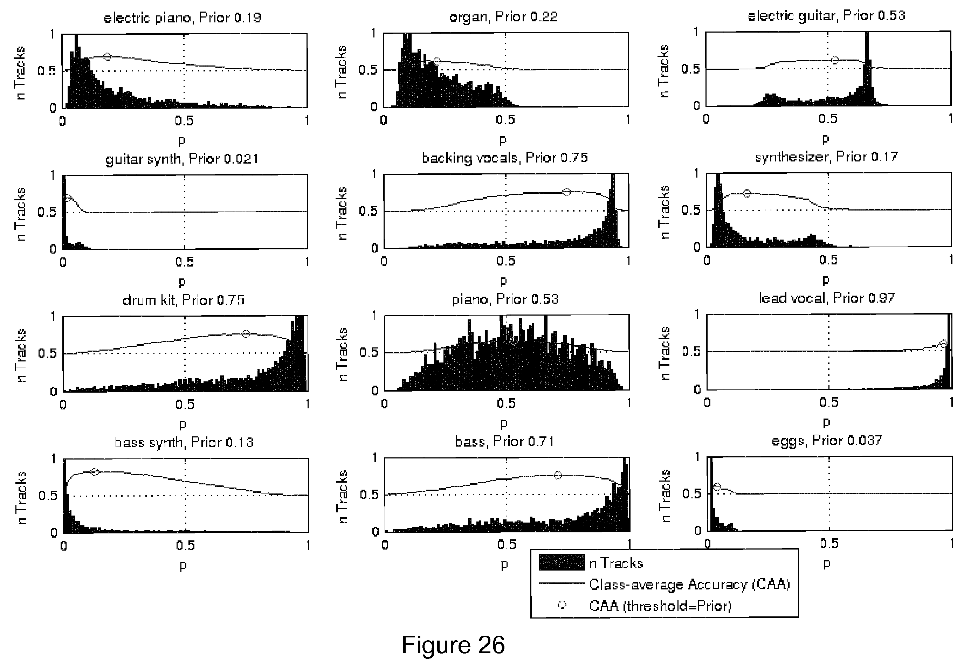

Probability distributions for examples of possible first classifications, based on an evaluation of a number n of tracks, are shown in Figure 26. The nine examples in Figure 26 suggest a correspondence between a prior probability for a given first classification and its probability distribution based on the n tracks. Such a correspondence is particularly marked where the SVM classifier was trained with an imbalanced training set of tracks. Consequently, the predicted probability threshold for the different examples vary over a considerable range.

Optionally, a logarithmic transformation may be applied to the probabilities output by the first classifiers 187 (s19.6), so that the probabilities of all the first classifications are on the same scale and the optimal predicated probability threshold may correspond to a predetermined value, such as 0.5.

Equations (5) to (7) below provide an example normalization which adjusts the optimal predicted probability threshold to 0.5. Where the probability output by a SVM classifier is $p$ and the prior probability $P$ of a particular tag being applicable to a track is greater than 0.5, then the normalized probability $p_{norm}$ is given by:

$$p_{norm} = 1 - (1 - p)^L \tag{5}$$

where

$$L = \frac{\log(0.5)}{\log(1 - P)} \tag{6}$$

Meanwhile, where the prior probability $P$ is less than or equal to 0.5, then the normalised probability $p_{norm}$ is given by:

$$p_{norm} = p^{L'} \tag{7}$$

where

$$L' = \frac{\log(0.5)}{\log(P)} \tag{8}$$

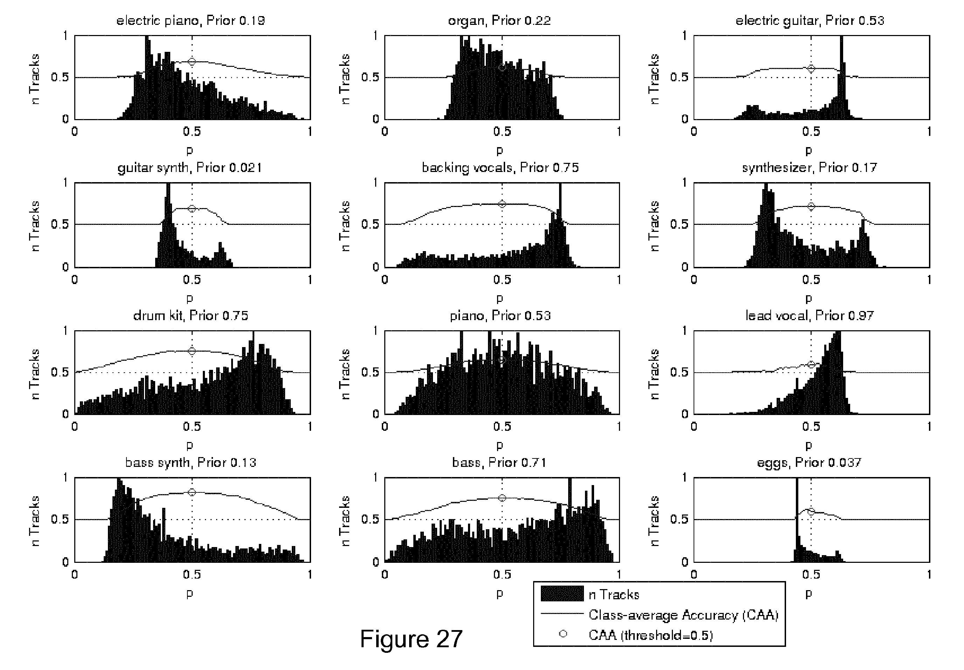

Figure 27 depicts the example probability distributions of Figure 26 after a logarithmic transformation has been applied, on which optimal predicated probability thresholds of 0.5 are marked.

The first classifications are then output (s19.7). The first classifications correspond to the normalised probability $p_{norm}$ that a respective one of the tags 190 to be considered applies to the audio track. The first classifications may include probabilities $p_{inst1}$ that a particular instrument is included in the audio track and probabilities $p_{gen1}$ that the audio track belongs to a particular genre.

Returning to Figure 19, in s19.8 to s19.10, second classifications for the input signal are determined based on the MFCCs and other parameters produced in s19.2, using the second classifiers 188. In this particular example, the features 186 on which the second classifications are based are per-frame MFCC feature vectors for the audio track and their first and second time derivatives.

In s19.8 to s19.10, the probabilities of the audio track including a particular instrument or belonging to a particular genre are assessed using probabilistic models that have been trained to represent the distribution of features extracted from audio signals captured from each instrument or genre. As noted above, in this example the probabilistic models are GMMs. Such models can be trained using an expectation maximisation algorithm that iteratively adjusts the model parameters to maximise the likelihood of the model for a particular instrument or genre generating features matching one or more input features in the captured audio signals for that instrument or genre. The parameters of the trained probabilistic models may be stored in a database, for example, in the mass storage 164 of the server 151, or in remote storage that is accessible to the server 151 via a network, such as the network 152.

For each instrument or genre, at least one likelihood is evaluated that the respective probabilistic model could have generated the selected or transformed features from the input signal. The second classifications correspond to the models which have the largest likelihood of having generated the features of the input signal.

In this example, probabilities are generated for each instrument tag at s19.8 and for each musical genre tag at s19.9. In other embodiments, the second controller 151 may generate only one or some of these second classifications and/or calculate additional second classifications at s19.8 and s19.9.

In this embodiment, in s19.8 and s19.9, probabilities $p_{inst2}$ that the instrument tags will apply, or not apply, to the audio track are produced by the second classifiers 188 using first and second Gaussian Mixture Models (GMMs), based on the MFCCs and their first time derivatives calculated in s19.2. Meanwhile, probabilities $p_{gen2}$ that the audio track belongs to a particular musical genre are produced by the second classifiers 188 using third GMMs. However, the first and second GMMs used to compute the instrument-based probabilities $p_{inst2}$ may be trained and used slightly differently from third GMMs used to compute the genre-based probabilities $_{gen2}$, as will now be explained.

In the following, s19.8 precedes s19.9. However, in other embodiments, s19.9 may be performed before, or in parallel with, s19.8.

In this particular example, first and second GMMs are used to generate the instrument-based probabilities $p_{inst2}$ (s19.8),based on MFCC features 186 obtained in s19.2.

The first and second GMMs used in s19.8 may have been trained with an Expectation-Maximisation (EM) algorithm, using a training set of examples which are known either to include the instrument and examples which are known to not include the instrument. For each track in the training set, MFCC feature vectors and their corresponding first time derivatives are computed. The MFCC feature vectors for the examples in the training set that contain the instrument are used to train a first GMM for that instrument, while the MFCC feature vectors for the examples that do not contain the instrument are used to train a second GMM for that instrument. In this manner, for each instrument to be tagged, two GMMs are produced. The first GMM is for a track that includes the instrument, while the second GMM is for a track that does not include the instrument. In this example, the first and second GMMs each contain 64 component Gaussians.

The first and second GMMs may then be refined by discriminative training using a maximum mutual information (MMI) criterion on a balanced training set where, for each instrument to be tagged, the number of example tracks that contain the instrument is equal to the number of example tracks that do not contain the instrument.

Returning to the determination of the second classifications, two likelihoods are computed based on the first and second GMMs and the MFCCs for the audio track. The first is a likelihood that the corresponding instrument tag applies to the track, referred to as $Lyes$, while the second is a likelihood that the instrument tag does not apply to the track, referred to as $L_{no}$. The first and second likelihoods may be computed in a log-domain, and then converted to a linear domain.

In this particular embodiment, the first and second likelihoods $L_{yes}$, $L_{no}$ are assessed for one or more temporal segments, or frames, of the audio track. The duration of a segment may be set at a fixed value, such as 5 seconds. In one example, where a sampling rate of 44100 Hz and an analysis segment length of 1024 samples for the first and second GMMs is used, a 5 second segment would contain 215 likelihood samples over which average likelihoods $L_{yes}$, $L_{no}$ and, optionally, their standard deviation for that segment can be calculated. Alternatively, the duration of a segment may be set to correspond to the tempo or bar times of the audio track. For example, the length of a bar may be determined, for example from tempo-related metadata for the audio track, and the segment length set to the duration of one bar. In other examples, the segment length may be set to a duration of multiple bars.

The first and second likelihoods $Lyes, L_{no}$ are then mapped to a probability $p_{inst2}$ of the tag applying. An example mapping is as follows:

$$p_{inst2} = \frac{\overline{L}_{yes}}{\left(\overline{L}_{yes} + \overline{L}_{no}\right)} \qquad (9)$$

where $\overline{L}_{yes}$ and $\overline{L}_{no}$ are averages of the first and second likelihoods $L_{yes}$, $L_{no}$ of the analysed segments of the audio track. In another example, a sum of the first and second likelihoods $Lyes, L_{no}$ for the analysed segments of the audio track might be used in Equation (9), instead of the averages $\overline{L}_{yes}$ and $\overline{L}_{no}$.

As noted above, the third GMMs, used for genre-based classification, are trained differently to the first and second GMMs. For each genre to be considered, a third GMM is trained based on MFCCs for a training set of tracks known to belong to that genre. One third GMM is produced for each genre to be considered. In this example, the third GMM includes 64 component Gaussians.

In s19.9, for each of the genres that may be tagged, a likelihood L is computed for the audio track belonging to that genre, based on the likelihood of each of the third GMMs being capable of outputting the MFCC feature vector of the audio track or, alternatively, the MFCC feature vector of a segment of the audio track. For example, to determine which of the eighteen genres in the list hereinabove might apply to the audio track, eighteen likelihoods would be produced.

The genre likelihoods are then mapped to probabilities $p_{gene2}$, as follows:

$$p_{gen2}(i) = \frac{L(i)}{\sum_{j=1}^{m} L(j)} \hspace{4cm} (10)$$

where m is the number of genre tags to be considered.

The second classifications, which correspond to the probabilities $p_{inst2}$ and $p_{gen2}$, are then output (s19.10).

In another embodiment, the first and second GMMs for analysing the instruments included in the audio track may be trained and used in the manner described above for the third GMMs. In yet further embodiments, the GMMs used for analysing genre may be trained and used in the same manner, using either of techniques described in relation to the first, second and third GMMs above.

The first classifications $p_{inst1}$ and $p_{gen1}$ and the second classifications $p_{inst2}$ and $p_{gen2}$ for the audio track are normalized to have a mean of zero and a variance of 1 (s19.11) and collected to form a feature vector for input to one or more second level classifiers 183 (s19.12). In this particular example, the second level classifiers 183 include third classifiers 189. The third classifiers 189 may be non-probabilistic classifiers, such as SVM classifiers.

The third classifiers 189 may be trained in a similar manner to that described above in relation to the first classifiers 187. At the training stage, the first classifiers 187 and the second classifiers 188 may be used to output probabilities for the training sets of example audio tracks from the database. The outputs from the first and second classifiers 187, 88 are then used as input data to train the third classifier 189.

The third classifier 189 generates determine probabilities $pinst_3$ for whether the audio track contains a particular instrument and/or probabilities $p_{gen3}$ for whether the audio track belongs to a particular genre (s19.13).

The probabilities $p_{inst3}$, $p_{gen3}$ are then log normalised (s19.14), as described above in relation to the first classifications, so that a threshold of 0.5 may be applied to generate the third classifications, which are then output at s19.15.

The second controller 161 then determines whether each instrument tag and each genre tag applies to the audio track based on the third classifications (s19.16).

Where it is determined that an instrument or genre tag 190 applies to the audio track (s19.16), the tag 190 is associated with the track (s19.17), for example, by storing an indication that the tag 190 applies as part of metadata for the audio track. Alternatively, or additionally, the probabilities themselves and/or the features 186 extracted at s19.2 may be output for further analysis and/or storage.

The second controller 161 determines and outputs the overall dominance 191 and the varying dominance 192 of one or more of the tags 190 for the audio track (s19.18 to s19.20). It is noted that, while Figure 19 shows s19.18 to s19.20 being performed after the output of the second classifications (s19.10), the determination of the third classifications and tags 37 (s19.11 to s19.16) and the tagging of the audio track (s19.17), the dominances 191, 92 may be determined before, or in parallel, with some or all of s19.10 to s19.17.

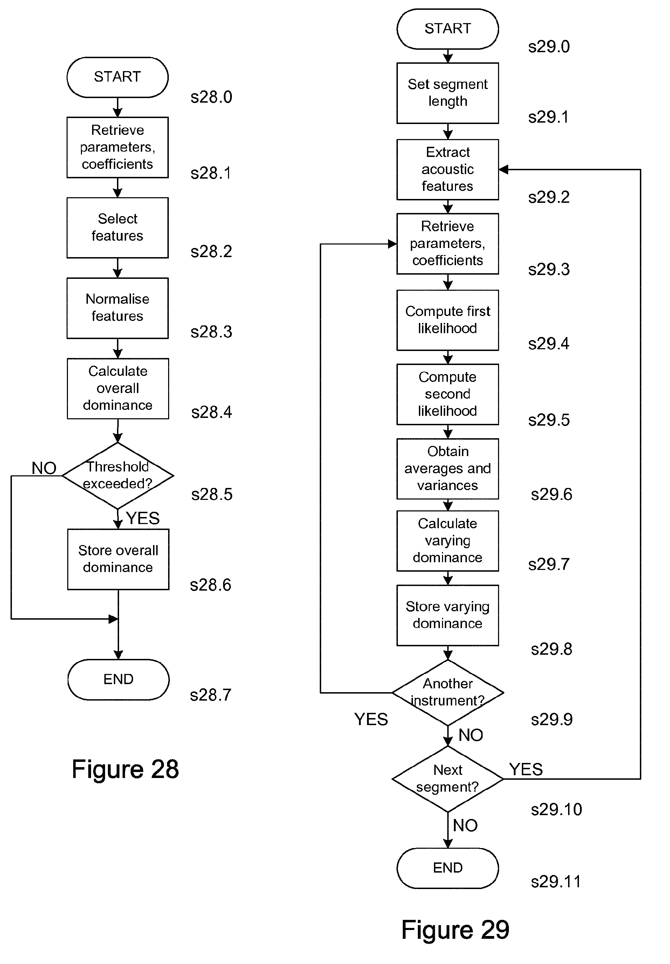

Example methods for determining the overall dominance 191 and varying dominance 192 for a tag 190 will now be explained with reference to Figures 28 and 29 respectively. In this particular embodiment, dominance is expressed using numerical values between o and 5, where o indicates a relatively low dominance and 5 indicates that a characteristic is highly dominant. However, in other embodiments, other scales or values may be used to indicate dominance.

The overall dominance 191 is assessed using an overall dominance model trained to predict an overall dominance value based on acoustic features 186 extracted from an audio track and the probabilities $p_{inst3}$, $p_{gen3}$ calculated by the third classifiers 189 of Figure 18 extracted from the audio track. The overall dominance model is created and trained using a plurality of $T_1$ training audio tracks for which dominance for different characteristics, such as instruments and/or genres, are known. For example, the training audio tracks may be music tracks for which one or more listeners have assessed the dominance of particular musical instruments and/or genres and provided annotations indicating the assessed dominances accordingly. The number $T_1$ of training audio tracks might be of the order of a few thousand. The $T_1$ training audio tracks may be selected to include a minimum of one hundred tracks, or a few hundred tracks, for each musical instrument or genre corresponding to a tag 190. In general, the availability of a larger number $T_1$ of training audio tracks allows the model to be trained with greater accuracy.

In the training process, acoustic features are extracted from the training audio tracks in a similar manner to that described with reference to Figure 20 and probabilities $p_{inst3}$, $p_{gen3}$ for each instrument and genre are generated as described with reference to s19.3 to s19.14 of Figure 19.

For each of the $T_1$ training audio tracks, selected acoustic features and the relevant probabilities $p_{inst3}$ or $p_{gen3}$ are concatenated to create a feature vector for estimating the dominance of a particular musical instrument or genre. Pairwise correlation coefficients for pairs of the extracted features are calculated. If a correlation coefficient indicates a high level of correlation between two features, for example if the correlation coefficient is greater than 0.9, then only one of the pair of features remains available for selection, in order to avoid redundancy.

The respective feature vectors $x_1...x_{T1}$, for each of the $T_1$ training audio tracks are then created, based on the selected features corresponding to the particular instrument or genre. A $T_1$ x $d$ matrix that includes the feature vectors $x_1 ... x_{T1}$, for the training audio tracks is compiled, where $d$ is the dimension of the feature vectors. At this stage, the dimension $d$ may be, for example, 250.

The matrix is normalised so that the values in each row have a mean of zero and a variance of unity. The mean and the standard deviation vectors used to normalise the rows of the matrix are stored in the second memory 163 for later use when analysing new audio tracks or other media content.

Even after the removal of correlated features, the number of features in the feature vectors may be large. To reduce computing requirements, a subset of $Q$ features may be selected to form a basis for the model for assessing the overall dominance.

In this particular example, the $Q$ features are selected using univariate linear regression tests, in which the "regressors" are column vectors based on the columns of the $T_1$ x $d$ matrix after normalisation, corresponding to extracted acoustic features and the probabilities $p_{insrt3}$ or $p_{gen3}$ corresponding to a particular tag of the $T_1$ training audio tracks, and the "data" are the dominances provided in the annotations for the training audio tracks. For each of the regressors, the following is performed.

A cross-correlation coefficient for one of the regressors, a so-called "regressor of interest", and the data is computed. The cross-correlation coefficient is then converted to a F-score, indicating the predictive capability of the cross-correlation, and then to a p-value, indicating its statistical significance.

$Q$ features are then selected, based on the F-scores and p-values for the respective regressors. The value of $Q$ may vary according to the dominance model that is used and a suitable value for $Q$ may be determined as part of the training procedure. For example, regressors may be trained on a subset of the $T$ training audio tracks, their performance assessed using the remaining training audio tracks and the number of features leading to the minimum mean-absolute-error (MAE) selected as $Q$. Typically, the number $Q$ of features in the subset will be between 1 and 30 for each instrument or genre.

The overall dominance model is then trained using the determined number Q of selected features and the probability $p_{inst3}$ or $p_{gen3}$ corresponding to the relevant instrument or genre. In one particular example, ordinary least squares regression is used to predict dominance, for example using Equation (11) as follows:

$$y = \beta_1 x_1 + \beta_2 x_2 + ... + \beta_Q x_Q + \text{A} \qquad (11)$$

where $\beta_1...\beta_Q$ are the regression coefficients and A is an intercept corresponding to a particular instrument or genre.

For each instrument or genre, certain parameters and data regarding the regression are stored in the second memory 163, for use in later analysis of audio tracks. In this particular example, where linear regression is used, the stored data may include the indices of the Q selected features, together with the corresponding regression coefficients $\beta_1...\beta_Q$ and intercept $A$ for the particular instrument or genre.

In other examples, another technique may be used instead of the least squares regression discussed above. Examples of alternatives for least squares regression include epsilon support vector machine (SVM) regression, as discussed in Smola, A.J. and Scholkopf, B., "A tutorial on support vector regression", Statistics and Computing, 2004, vol 14, pages 199-222, 2004, and support vector ordinal regression, described Chu W. and Keerthi, S.S., "New approaches to support vector ordinal regression", in Proceedings of the 22nd International Conference on Machine Learning (ICML-22), 2005, pages 145-152. Where epsilon support vector machine regression or support vector ordinal regression is used, the dominance may be predicted using Equation (12) in place of Equation (11), as follows:

$$\sum_{i=1}^{s} \alpha_i K\left(\vec{x}, \vec{x}_i\right) + b \qquad (12)$$

where $K$ is a kernel function, such as the RBF kernel in Equation (3) above, $\alpha_i$ $i=1,..., s$ are weights, $b$ is a constant offset, and $\vec{x}_i$ are support vectors.

Moreover, it is not necessary for the same regression method to be used for training the overall dominance models for different instruments and genres. In other embodiments, the regression method used for a particular instrument or genre can be selected based on the performance of the different regression methods on validations performed on the $T_1$ training audio tracks. For example, for each value of $Q$ to be evaluated, multiple models may be trained, such as a linear regression model, an epsilon SVM regression model using a radial basis function kernel, and a support vector ordinal regression model with explicit constraints by Chu and Keerthi (2005, cited above) on a subset of the $T1$ training audio tracks, and their performance assessed using the remaining $T_1$ training audio tracks by evaluating the mean-absolute-error (MAE) between the data and predictions. For each value of $Q$, the regressor leading to the smallest MAE is selected. Hence, in this example, the dominance of different instruments and/or genres may be determined using different regression methods.

Other examples of regression methods that may be used for determining dominance include random forest regression, neural networks, polynomial regression, general linear models, logistic regression, probit regression, non-linear regression, principal components analysis, ridge regression, Lasso regression, and so on.

Where such other regression techniques are used, the parameters and data stored in the second memory 163 for use in later analysis of audio tracks may differ from those noted above. For example, if an epsilon support vector machine regression or support vector ordinal regression is to be used, their respective parameters, such as support vectors $\vec{x}_i$, a RBF kernel width parameter $\gamma$, weights $\alpha_i$ and an offset $b$ may be stored.

Figure 28 depicts an example method of determining the overall dominance 191 of a particular characteristic of media content at s19.18, using the overall dominance model. This example method is described in relation to media content in the form of an audio track. However, it is noted that overall dominance 191 may be calculated for non-audio characteristics and that overall dominance 191 may be calculated for audio characteristics and/or non-audio characteristics of other types of media content.

Starting at s28.0, the regression parameters and data stored in the second memory 163 for an instrument or genre corresponding to a tag 190 of the audio track are retrieved from the second memory 163 (s28.1). In this example, where linear regression is used, the retrieved data includes parameters $Q, A,$ indices of features to be selected and regression coefficients $\beta_1...\beta_Q$.

The $Q$ features indicated by the retrieved indices are then selected from the audio features 31 extracted from the audio track at s19.2 (s28.2) and normalised (s28.3).

The overall dominance 191 is then calculated, using the retrieved *coefficients* $\beta_1...\beta_Q,$ the intercept A and the probability $p_{inst3}$ or $p_{gen3}$ corresponding to the instrument or genre being assessed, as calculated by the third classifiers 189 at s19.13 to s19.14 of Figure 19 (s28.4). In this example, where linear regression is used, the dominance is calculated using Equation (11) above. Where epsilon support vector machine regression or support vector ordinal regression is used, the dominance may be calculated using Equation (12) above.

In this particular example, if the overall dominance 191 exceeds a threshold (s28-5), such as 0.5, then it is stored as metadata for the audio track (s28.6). Alternatively, in another embodiment, such a threshold may be omitted and the overall dominance 40 stored at s28.6 regardless of its value.

The procedure for determining the overall dominance 191 for the particular characteristic is then complete (s28.7). The procedure of Figure 28 may then be repeated to calculate the overall dominance 191 of another characteristic of the media content, as a part of s19.18.

The varying dominance 192 is assessed using a varying dominance model trained using a plurality of $T_2$ training audio tracks for which varying dominance values are available. A suitable value for $T_2$ is at least one hundred, however the model may be trained more accurately if at least a few hundred training audio tracks are provided with varying dominance information for each musical instrument.

The $T_2$ training audio tracks may be music tracks for which one or more listeners have assessed the dominance of particular musical instruments over one or more time intervals within the music tracks and provided annotations indicating the assessed dominances for that segment of the music track accordingly. The annotations may indicate one or more first time points or intervals with a relatively low dominance value for a particular musical instrument and one or more other points or time second intervals with a relatively high dominance value for that instrument when compared with the first time points or intervals. While it may be possible to provide annotations for time intervals covering an entire duration of a training audio track, it is not necessary to do so.

Additionally, or alternatively, the $T_2$ training audio tracks may include music tracks for which annotated dominance information provides only overall dominance values. In some embodiments, the $T_2$ training audio tracks may be the same as, or may include, the $T_1$ training audio tracks used to train the overall dominance model.

In the training process, acoustic features are extracted from samples of the training audio tracks and MFCCs are computed in a similar manner to that described with reference to Figure 20. For each musical instrument to be assessed, two likelihoods are computed based on first and second GMMs and the MFCCs for each sample. The first is a likelihood that a particular musical instrument contributes to the sample, referred to as *Lyes*, while the second is a likelihood that the instrument tag does not contribute to the sample, referred to as $L_{no}$.

The first and second GMMs may be the same as the first and second GMMs trained for use in the second classifiers 188 and the first and second likelihoods *Lyes, $L_{no}$* may be calculated in the same manner described hereinabove.

Where annotated dominance information has been provided for separate segments of a training audio track, averages of the likelihoods *Lyes, $L_{no}$* and their standard deviation for each musical instrument in each segment are calculated. If only overall dominance information is available for a training audio track, the averages of the likelihoods

*Lyes, $L_{no}$* and their standard deviation may be calculated over the entire duration of the training audio track.

In this particular example, the varying dominance model is a linear regression model, trained using a least squares criterion. Alternatively, or in addition, to linear regression, the model could use support vector machine regression or one of the other regression techniques mentioned above in relation to the overall dominance model. The selection of which regression technique to use for assessing varying dominance of a particular musical instrument can be made using cross validation experiments on the $T_2$ training audio tracks. In such experiments, a subset of the $T_2$ training audio tracks are used to train regressors with different parameters and their accuracy in predicting the dominance of a particular musical instrument is evaluated using, for example the MAE criterion, on other ones of the $T_2$ training audio tracks that were not included in the subset. The regression model and parameters which provide the best prediction accuracy on the other $T_2$ training audio tracks may then be selected as the technique to be used for assessing varying dominance of that particular musical instrument.

The selection of the inputs to the varying dominance model is determined through univariate linear regression tests, in a similar manner to the selection of the Q features for the overall dominance model discussed above. In this particular example, the likelihoods $L_{yes}$, $L_{no}$ of all the musical instruments to be evaluated are used as initial input, and the regressors are selected from these likelihoods.

The varying dominance model is then trained using the selected inputs, for example using Equation (11) or (12) above. For each instrument, the parameters and data used for the regression analysis are stored in the second memory 163 for use in analysing further audio tracks. If linear regression is used, the stored parameters and data may include the number and indices of the selected inputs, together with the corresponding regression coefficients and intercept. If a support vector machine regression model is used, the parameters and data include support vectors, weights, the offset, and kernel parameters.

Figure 29 depicts an example method of determining the varying dominance 192 of a particular audio characteristic of an audio track at s19.19, using the varying dominance model, starting at s29.0. It is noted that the method of Figure 29 is merely a specific example, and that varying dominance 192 may be calculated for audio characteristics and/or non-audio characteristics of other types of media content, over on a duration or extent of the media content.

In this particular embodiment, the inputs to the varying dominance model include likelihoods $L_{yes}$, $L_{no}$ that multiple segments of the audio track include a particular musical instrument. In embodiments where such likelihoods $L_{yes}$, $L_{no}$ and, optionally, averages of those likelihoods are calculated when the probabilities $p_{inst2}$, are determined by the second classifiers 188 at s19.9, the first and second likelihoods $L_{yes}$, $L_{no}$ and, where available, their averages as determined by the second classifiers 188 may be used in determining the varying dominance. However, for the sake of completeness, a method of calculating the first and second likelihoods $L_{yes}$, $L_{no}$ and their averages will now be described, with reference to s29.1 to s29.5.

Optionally, if the likelihoods $L_{yes}$, $L_{no}$ are to be assessed over one or more temporal segments of the audio track, a segment length is set at s29.1. As discussed above in relation to s19.8, the duration of a segment may be set at a fixed value, such as 5 seconds. However, in some embodiments, the duration of a segment may be set to correspond to the tempo or bar times of the audio track. For example, the length of a bar may be determined, for example from tempo-related metadata for the audio track, and the segment length set to the duration of one bar. In other examples, the segment length may be set to a duration of multiple bars.

Acoustic features 186 are then extracted from the segment (s29.2), in a similar manner to that shown in Figure 20. In this example, the acoustic features are MFCCs and their first order time derivatives.

For a particular musical instrument corresponding to a tag 190 of the audio track, the number and indices of inputs to be selected for the varying dominance model, the corresponding regression coefficients and intercept are retrieved from the second memory 163 (s29.3).

For each sample within the segment, a first likelihood *Lyes* that the sample includes the musical instrument is computed (s29.4) using the first GMM and the MFCCs and their first-order time-derivatives. A second likelihood $L_{no}$ that the sample does not include the musical instrument is computed (s29.5) using the second GMM and the MFCCs and their first-order time-derivatives.

Respective averages and standard deviations for the first and second likelihoods *Lyes, $L_{no}$* over the duration of the segment are obtained (s29.6). For example, the first and second likelihoods $L_{yes}$, $L_{no}$ may be calculated at s29.6 or, if already available from the calculation of the second classifications, retrieved from the storage in, for example, the second RAM 167.

The varying dominance 192 for that instrument in that segment is then calculated using the varying dominance model and the inputs identified in s29.1 (s29.7), and then stored (s29.8). In this example, the varying dominance 192 is expressed as a value between o and 5.

If the dominance of another instrument is to be evaluated for that segment (s29.9), s29.3 to s29.8 are then repeated for the next instrument.

When the dominance of all of the instruments to be assessed for the segment has been determined (s29.10), the next segment is analysed by repeating s29.1 to s29.10 for the next segment.

Once all of the segments have been analysed (s29.10), the procedure ends (s29.11). The procedure of Figure 29 may then be repeated for one or more other characteristics of the audio track as a part of s19.19.

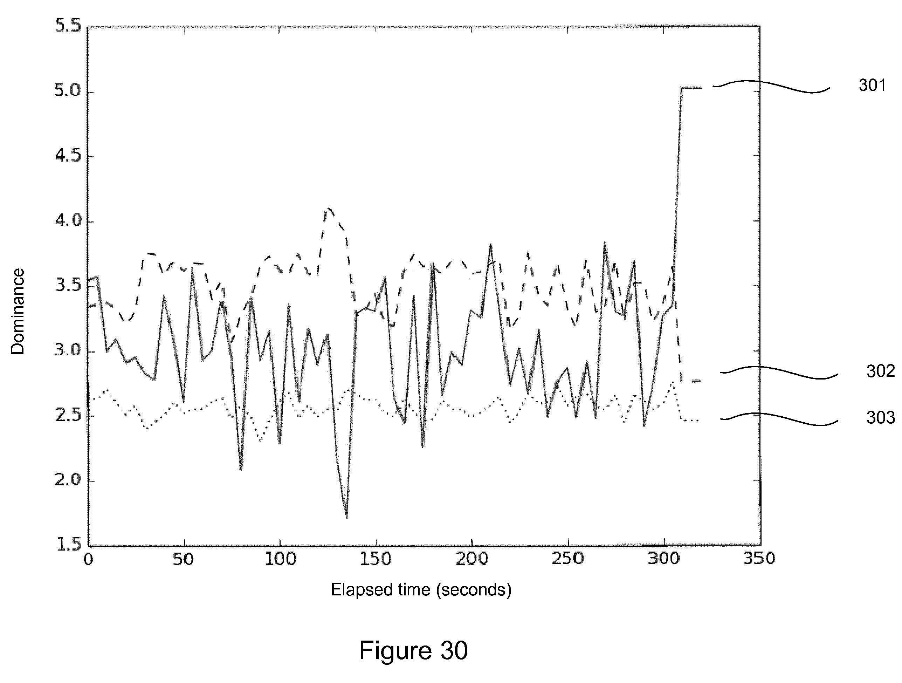

Figure 30 depicts varying dominance information for an example audio track. The solid line 301 depicts the varying dominance 192 of electric guitar in the audio track. The dashed line 302 depicts the varying dominance 192 of a vocals in the same audio track, while the dotted line 303 shows an average of the dominance 192 of the other instruments, which include bass guitar and drums. In this example, the electric guitar is dominant in the beginning of the audio track. The vocals begin at around 30 seconds, which is reflected an increase in the vocals dominance value at that time point. As another example, at around 120 seconds, a section begins during which vocals dominate and the electric guitar is somewhat quieter in the background. This is reflected by an increase in the vocals dominance and a drop in the electric guitar dominance at that time point.

Returning to Figure 19, further features may, optionally, be calculated and stored based on the varying dominance 192 (s19.20). Such features may include dominance difference. For example, where the media content is an audio track or video content including music, the dominance difference may be based on the difference between the varying dominance 192 for a particular musical instrument and one or more other musical instruments.

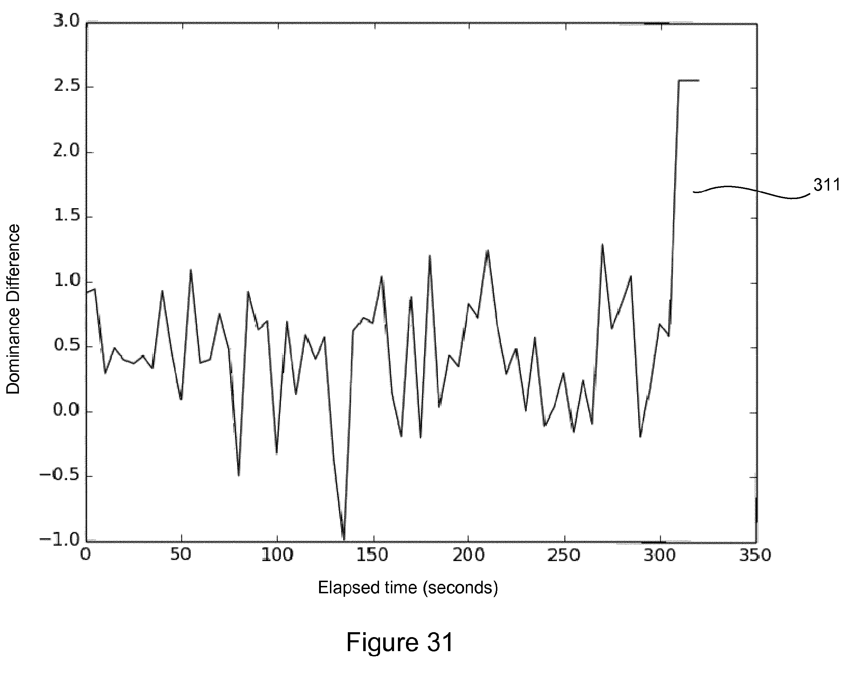

Figure 31 shows the difference between the dominance of the electric guitar and the average dominance of the other instruments in the example audio track discussed previously with reference to Figure 30. The change in dominance of the electric guitar at 30 seconds and 45 seconds, noted hereinabove, is reflected by the changes shown in the solid line 311 of Figure 31 at those time points.

Other dominance-related features that may be calculated and stored at s19.20 instead of, or as well as, dominance difference include dominance change frequency and dominance section duration.

Dominance change frequency indicates how frequently dominance changes and may be calculated, for example, using a periodicity analysis in which a Fast-Fourier Transform (FFT) is applied to the varying dominance 192 to determine a frequency and, optionally, amplitude, of a strongest dominance change frequency. Alternatively, the second controller 161 may be configured to detect when the varying dominance 192 crosses an average dominance level, using a mean number of crossings in a time period and, optionally, derivatives of the varying dominance 192, to calculate a dominance change frequency. Instead of using the varying dominance 192, either of these methods may instead use the dominance difference. For example, such a periodicity analysis may be performed on the dominance difference, or the mean number of instances where the dominance difference crosses a zero level in a time period may be used to calculate a dominance change frequency.

Dominance section duration relates to the duration of sections of the audio track in which a particular musical instrument exhibits a strong dominance, for example, to the average dominance, or dominance difference, of that instrument over the duration of the audio track. To calculate the dominance section duration, the second controller 161 detects the sections in which the particular musical instrument has a strong dominance or dominance difference, determines the average duration of those sections and, optionally, the variation in their durations.

While the above example relates to sections in which a particular musical instrument exhibits strong dominance, domination section duration may be based on sections in which the instrument exhibits a weak dominance. In other examples, the dominance of the particular musical instrument may be compared with a fixed threshold, or an adaptive threshold based on, for example, a running average, or with an average dominance of other instruments in the audio track, to determine whether its own dominance is strong or weak.

It will be appreciated that the above-described embodiments are not limiting on the scope of the invention, which is defined by the appended claims and their alternatives. Various alternative implementations will be envisaged by the skilled person, and all such alternatives are intended to be within the scope of the claims.

In particular, the example embodiments were described in relation to the analysis and selection of audio tracks, such as music. However, as noted repeatedly above, other embodiments may be configured to select other types of media content in addition to, or instead of, audio content. Such types of media content include images, presentations, video content, text content such as e-books, and so on.

To provide another example supplementing those discussed above, overall dominance of particular subject-matter, such as wildlife, in an image may be determined, while varying dominance of an image may be determined across the extent of an image. Where stereo image data, stereo audiovisual data or stereo video data is provided, the overall dominance may be based the prominence of the particular subject-matter, based its position in the foreground or background. In yet another example, where the media content includes text, such as a presentation or e-book, overall dominance and/or varying dominance may be assessed based on a genre of the media content and/or a subject matter of the media content.

Moreover, while the presentation of sub-regions 61, 62, 63, 64, 65, 71, 72, 73 in the adjustment screens 60, 70 was described with regard to the specific example of temporal segments of an audio track, such sub-regions may be used to show dominance of characteristics of in temporal segments of other media content, such as audiovisual data or video content, or in segments of a passage of text such as an e-book. In yet another embodiment, sub-regions may be used to represent dominance of characteristics in spatial segments of image data, audiovisual or video data, or even the dominance of characteristics in the foreground, middle and background of stereo image data, stereo audiovisual data or stereo video data. In a further embodiment, where the media content is stereo audio data, sub-regions may be used to indicate the dominance of characteristics in segments of a listening space between multiple audio outputs.

It is noted that the disclosure of the present application should be understood to include any novel features or any novel combination of features either explicitly or implicitly disclosed herein or any generalization thereof and during the prosecution of the present application or of any application derived therefrom, new claims may be formulated to cover any such features and/or combination of such features.

Embodiments of the present invention may be implemented in software, hardware, application logic or a combination of software, hardware and application logic. The software, application logic and/or hardware may reside on memory, or any computer media. In an example embodiment, the application logic, software or an instruction set is maintained on any one of various conventional computer-readable media. In the context of this document, a "computer-readable medium" may be any media or means that can contain, store, communicate, propagate or transport the instructions for use by or in connection with an instruction execution system, apparatus, or device, such as a computer.

A computer-readable medium may comprise a computer-readable storage medium that may be any tangible media or means that can contain or store the instructions for use by or in connection with an instruction execution system, apparatus, or device, such as a computer as defined previously. The computer-readable medium may be a volatile medium or non-volatile medium.

According to various embodiments of the previous aspect of the present invention, the computer program according to any of the above aspects, may be implemented in a computer program product comprising a tangible computer-readable medium bearing computer program code embodied therein which can be used with the processor for the implementation of the functions described above.

Reference to "computer-readable storage medium", "computer program product", "tangibly embodied computer program" etc, or a "controller", "processor" or "processing circuit" etc. should be understood to encompass not only computers having differing architectures such as single/multi processor architectures and sequencers/parallel architectures, but also specialised circuits such as field programmable gate arrays FPGA, application specify circuits ASIC, signal processing devices and other devices. References to computer program, instructions, code etc. should be understood to express software for a programmable processor firmware such as the programmable content of a hardware device as instructions for a processor or configured or configuration settings for a fixed function device, gate array, programmable logic device, etc.

If desired, the different functions discussed herein may be performed in a different order and/or concurrently with each other. Furthermore, if desired, one or more of the above-described functions may be optional or may be combined.

Although various aspects of the invention are set out in the independent claims, other aspects of the invention comprise other combinations of features from the described embodiments and/or the dependent claims with the features of the independent claims, and not solely the combinations explicitly set out in the claims.

**Claims**

1. An apparatus comprising:

   a controller; and
   a memory in which is stored computer-readable instructions which, when executed by the controller, cause the apparatus to:

   cause presentation on a display of a graphical user interface having two or more regions that correspond to respective media content characteristics;
   receive an indication from an input arrangement of input manipulating an attribute of at least one region of the two or more regions and determining a dominance of at least one of said respective characteristics based, at least in part, on said attribute; and
   output information identifying media content in which said at least one characteristic has a dominance within a respective range of dominance values, said range being based, at least in part, on the determined dominance.

2. An apparatus according to claim 1, wherein:

   said attribute is a size of the at least one region; and/or
   said two or more regions are presented as three dimensional objects in said graphical user interface.

3. An apparatus according to claim 1 or 2, wherein said dominance includes a varying dominance indicating a level of prominence of the respective characteristic in one or more segments of the media content.

4. An apparatus according to claim 3, wherein the two or more regions include sub-regions, the attributes of the sub-regions indicating the varying dominance of the respective media content characteristic in a corresponding temporal segment of the media content.

5. An apparatus according to claim 4, wherein:

said memory stores one or more reference configurations of sub-regions; and
the computer-readable instructions, when executed by the controller, causes the apparatus to respond to an indication received from the input arrangement of input selecting one of said reference configurations by causing display of the two or more regions according to the selected reference configuration.

6. An apparatus according to any of the preceding claims, configured to receive indication from the input arrangement of input selecting one or more other regions of the two or more regions to be linked to the at least one region, wherein the computer-readable instructions, when executed by the controller, cause the apparatus to respond to the input manipulating the attribute of the at least one region by adjusting the corresponding attribute of the one or more other regions.

7. An apparatus according to any of the preceding claims, wherein said media content comprises audio data and said respective characteristics include at least one of:

a musical instrument contributing to the media content;
a vocal contributing to the media content;
a tempo of the media content; and
a genre of the media content.

8. An apparatus according to any of the preceding claims wherein said media content comprises at least one of image data, text data and video data.

9. An apparatus according to claim 8, wherein said visual characteristics include at least one of:

a genre of the media content; and
a subject of the media content.

10. An apparatus according to any of the preceding claims, wherein the controller is configured to identify said media content.

11. An apparatus according to any of the preceding claims wherein the computer-readable instructions, when executed by the controller, cause the apparatus to cause transmission, via a communication arrangement, of a request for an indication of the media content to a second apparatus and to receive, from the second apparatus, a response containing said indication.

12. A system comprising:

a first apparatus according to claim 11; and
said second apparatus;

wherein said second apparatus comprises:

a second controller; and
a second memory in which is stored computer-readable instructions which, when executed by the second controller, cause the second apparatus to:

identify said media content in which said at least one characteristic has a dominance within a respective range of dominance values, said range being based, at least in part, on the determined dominance; and
transmit a response to the first apparatus indicating said media content.

**13.** A system according to claim 12, wherein said computer-readable instructions stored on said second memory, when executed by the second controller, cause the second apparatus to:

determine one or more features of a media content file;
determine dominance of a characteristic of the media content in the media content file based at least in part on said one or more acoustic features; and
store metadata for the media content indicating said dominance of the characteristic.

**14.** A method comprising:

causing presentation, on a display, of a graphical user interface having two or more regions that correspond to respective media content characteristics;
receiving an indication from an input arrangement of input manipulating an attribute of at least one region of the two or more of the regions and determining a dominance of at least one of said respective characteristics based, at least in part, on said attribute; and
outputting information identifying media content in which a dominance of said at least one characteristic is within a respective range of dominance values, said range being based, at least in part, on the determined dominance.

**15.** A method according to claim 14, comprising:

causing transmission, via a communication arrangement, of a request for an indication of the media content to a second apparatus and receiving, from the second apparatus, a response containing said indication.

**16.** A method according to claim 14 or 15, wherein:

said attribute is a size of the at least one region; and/or
said two or more regions are presented as three dimensional objects in said graphical user interface.

**17.** A method according to claim 14, 15 or 16, wherein said dominance includes a varying dominance indicating a level of prominence of the respective characteristic in one or more segments of the media content.

**18.** A method according to claim 17, wherein the two or more regions include sub-regions, the attributes of the sub-regions indicating the varying dominance of the respective media content characteristic in a corresponding segment of the media content.

**19.** A method according to any of claims 14 to 18, comprising:

receiving an indication from the input arrangement of input selecting one or more other regions of the two or more regions to be linked to the at least one region; and
responding to the input manipulating the attribute of the at least one region by adjusting the corresponding attribute of the one or more other regions.

**20.** Computer-readable instructions which, when executed by computing apparatus, cause the computing apparatus to perform a method according to any of claims 14 to 19.

Figure 1

Figure 2

Figure 3

Figure 4

Figure 5

Figure 6

Figure 7

Figure 8

Figure 9

Figure 10

Figure 11

Figure 12

Figure 13

Figure 14

Figure 15

162    151    167

I/O interface

Second RAM

161

Second controller

163

Second memory

165

Operating system

166

Software application

168

Look-up table

164

Mass storage

## Figure 16

START    s17.0

Receive request    s17.1

Search for media content    s17.2

Transmit response    s17.3

END    s17.4

## Figure 17

Figure 18

START — s19.0

Decode input signal — s19.1

Extract features — s19.2

Select and normalise/ transform features — s19.3

Define feature vector — s19.4

Generate probabilities $P_{inst1}$, $P_{gen1}$ — s19.5

Log transformation — s19.6

Output first classifications — s19.7

Generate probabilities $P_{inst2}$ — s19.8

Generate probabilities $P_{gen2}$ — s19.9

Output second classifications — s19.10

Normalise first and second classifications — s19.11

Define feature vector — s19.12

Generate probabilites $P_{inst3}$, $P_{gen3}$ — s19.13

Log normalisation — s19.14

Output third classifications — s19.15

Determine tags — s19.16

Tag content — s19.17

Determine overall dominance — s19.18

Determine varying dominance — s19.19

Other dominance features — s19.20

END — s19.21

Figure 19

START — s20.0

Resample
decoded
signal — s20.1

Pre-emphasis — s20.2

Frame
blocking — s20.3

Windowing — s20.4

FFT — s20.5

Filtering — s20.6

Logarithm — s20.7

Obtain
MFCCs — s20.8

Generate
MFCC means,
derivatives — s20.9

Output
features — s20.10

END — s20.11

Figure 20

Figure 21

Figure 22

Figure 23

Figure 24

Figure 25

Figure 26

Figure 27

Figure 28

Figure 29

Figure 30

EP 3 096 242 A1

Figure 31

Europäisches
Patentamt
European
Patent Office
Office européen
des brevets

# EUROPEAN SEARCH REPORT

Application Number

EP 15 16 8486

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2009/153628 A1 (SONY ERICSSON MOBILE COMM AB [SE]; LIU JING [CN]; ZHOU LU [CN]; ZHANG) 23 December 2009 (2009-12-23) <br> * page 1 * <br> * page 5 - page 6 * <br> * page 7 * <br> * page 8 * <br> * figure 3 * | 1-15 | INV. <br> G06F17/30 |
| X | US 2014/325408 A1 (LEPPANEN JUSSI [FI] ET AL) 30 October 2014 (2014-10-30) <br> * paragraph [0044] - paragraph [0061] * <br> * paragraph [0063] * | 1-15 | |
| X | US 2010/229088 A1 (NAKAJIMA TAIDO [US] ET AL) 9 September 2010 (2010-09-09) <br> * paragraphs [0034] - [0045], [0056] - [0067]; figures 2-4,7 * | 1-15 | |
| X | EP 2 857 988 A1 (NOKIA TECHNOLOGIES OY [FI]) 8 April 2015 (2015-04-08) <br> * paragraph [0037] - paragraph [0082] * | 1-15 | |
| A | VIGNOLI F ET AL: "Visual Playlist Generation on the Artist Map", PROCEEDINGS ANNUAL INTERNATIONAL SYMPOSIUM ON MUSIC INFORMATIONRETRIEVAL, XX, XX, 14 September 2005 (2005-09-14), pages 520-523, XP002360088, <br> * the whole document * | 1-15 | TECHNICAL FIELDS SEARCHED (IPC) <br><br> G06F |
| A | US 6 674 452 B1 (KRAFT REINER [US] ET AL) 6 January 2004 (2004-01-06) <br> * the whole document * | 1-15 | |
| A | US 2012/254363 A1 (MARTIN KEITH DANA [US] ET AL) 4 October 2012 (2012-10-04) <br> * the whole document * | 1-15 | |

The present search report has been drawn up for all claims

| Place of search | Date of completion of the search | Examiner |
|---|---|---|
| The Hague | 14 March 2016 | Papanikolaou, N |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches
Patentamt

European
Patent Office

Office européen
des brevets

Application Number

EP 15 16 8486

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☒ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

## ANNEX TO THE EUROPEAN SEARCH REPORT
## ON EUROPEAN PATENT APPLICATION NO.

EP 15 16 8486

This annex lists the patent family members relating to the patent documents cited in the above-mentioned European search report.
The members are as contained in the European Patent Office EDP file on
The European Patent Office is in no way liable for these particulars which are merely given for the purpose of information.

14-03-2016

| Patent document cited in search report | | Publication date | Patent family member(s) | | Publication date |
|---|---|---|---|---|---|
| WO 2009153628 | A1 | 23-12-2009 | CN 101609703 A<br>WO 2009153628 A1 | | 23-12-2009<br>23-12-2009 |
| US 2014325408 | A1 | 30-10-2014 | US 2014325408 A1<br>WO 2014174497 A2 | | 30-10-2014<br>30-10-2014 |
| US 2010229088 | A1 | 09-09-2010 | NONE | | |
| EP 2857988 | A1 | 08-04-2015 | EP 2857988 A1<br>WO 2015049419 A1 | | 08-04-2015<br>09-04-2015 |
| US 6674452 | B1 | 06-01-2004 | NONE | | |
| US 2012254363 | A1 | 04-10-2012 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7659471 B2
- GB 1503467 A
- FI 2014051036 W
- GB 1401626 A
- US 2007240558 A1
- US 14302057 B
- WO 2013164661 A1
- WO 2014001849 A1
- US 2008236371 A1

**Non-patent literature cited in the description**

- **ERONEN ; KLAPURI.** Music Tempo Estimation With k -NN Regression. *IEEE Transactions on Audio, Speech, and Language Processing,* vol. 18, 50-57
- **SMOLA, A.J. ; SCHOLKOPF, B.** A tutorial on support vector regression. *Statistics and Computing, 2004,* 2004, vol. 14, 199-222
- **CHU W. ; KEERTHI, S.S.** New approaches to support vector ordinal regression. *Proceedings of the 22nd International Conference on Machine Learning (ICML-22),* 2005, 145-152